(19) Europäisches Patentamt
European Patent Office
Office européen des brevets

(11) **EP 3 710 878 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **18796423.4**

(22) Anmeldetag: **30.10.2018**

(51) Int Cl.:
*G02B 27/01* (2006.01)      *F21V 8/00* (2006.01)
*G02B 6/34* (2006.01)      *G02B 27/42* (2006.01)

(86) Internationale Anmeldenummer:
**PCT/EP2018/079744**

(87) Internationale Veröffentlichungsnummer:
**WO 2019/096579 (23.05.2019 Gazette 2019/21)**

(54) **LICHTLEITER FÜR EIN HMD, HMD UND VERFAHREN ZUM ÜBERTRAGEN EINES BILDES IN EINEM HMD**

LIGHT GUIDE FOR AN HMD, HMD AND METHOD FOR TRANSMITTING AN IMAGE IN AN HMD

GUIDE DE LUMIÈRE POUR HMD, HMD ET PROCÉDÉ DE TRANSFERT D'UNE IMAGE DANS UN HMD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2017 DE 102017126908**

(43) Veröffentlichungstag der Anmeldung:
**23.09.2020 Patentblatt 2020/39**

(73) Patentinhaber: **Carl Zeiss Jena GmbH**
**07745 Jena (DE)**

(72) Erfinder:
• SINGER, Wolfgang
73431 Aalen (DE)
• DOBSCHAL, Hans-Jürgen
99518 Bad Sulza (DE)
• HILLENBRAND, Matthias
07745 Jena (DE)

(74) Vertreter: **PATERIS Patentanwälte PartmbB**
**Markgrafenstrasse 22**
**10117 Berlin (DE)**

(56) Entgegenhaltungen:
**US-A1- 2010 321 781      US-A1- 2017 315 346**
**US-A1- 2017 322 426**

**Beschreibung**

Die vorliegende Erfindung betrifft einen Lichtleiter zum Leiten von Licht, der für ein am Kopf zu tragendes Display, auch Head-Mounted Display oder kurz HMD genannt, Verwendung finden kann. Daneben betrifft die Erfindung ein HMD sowie ein Verfahren zum Übertragen eines Bildes in einem HMD.

Eine gängige Form von Head-Mounted Displays verwendet Bildschirme, die vor den Augen getragen werden und dem Benutzer elektronische Bilder wie etwa computergenerierte Bilder oder von Kameras aufgenommene Bilder, präsentieren. Derartige Head-Mounted Displays sind häufig voluminös und erlauben keine unmittelbare Wahrnehmung der Umgebung.

In jüngerer Zeit sind Head-Mounted Displays entwickelt worden, die in der Lage sind, elektronische Bilder mit dem unmittelbar wahrgenommenen Bild der Umgebung zu kombinieren und so dem Benutzer ein elektronisches Bild darzubieten, ohne die unmittelbare Wahrnehmung der Umgebung zu verhindern. Derartige Head-Mounted Displays, die, insbesondere wenn sie in Brillenform ausgebildet sind, auch Datenbrillen genannt werden, ermöglichen die Nutzung dieser Technologie im alltäglichen Leben.

Beim Kombinieren der elektronischen Bilder mit dem unmittelbar wahrgenommenen Bild der Umgebung unterscheidet man bei Datenbrillen im Wesentlichen die folgenden Prinzipien, auf denen das Kombinieren beruhen kann:

1. Verwendung einer normalen Brille mit vorgesetztem Strahlkombinierer (z.B. Strahlteilerwürfel).

2. Einkopplung des Lichtes zwischen Kopf und Brillenglas von der Seite aus und Reflexion des Lichtes an der Innenseite des Brillenglases in Richtung auf das Auge, wobei unterstützend Beugungsgitter, Fresnelelemente o.ä. eingesetzt werden können.

3. Führung des Lichtes des elektronischen Bildes mittels interner Reflektion im Brillenglas und Zusammenführen des Strahlengangs des elektronischen Bildes mit dem unmittelbaren Bild der Umgebung mit Hilfe einer im Brillenglas angeordneten Auskopplungsstruktur zum Auskoppeln des Strahlengangs des elektronischen Bildes aus dem Brillenglas in Richtung auf das Auge. Das Brillenglas dient dabei als Lichtleiter für das eingekoppelte Licht.

Das erste Prinzip funktioniert zwar optisch gut, hat aber nur eine sehr geringe soziale Akzeptanz, da der vorgesetzte Strahlkombinierer nach außen sehr auffällig und groß ist. Außerdem wird die Brille dadurch vorderlastig Das zweite Prinzip lässt sich anatomisch nur bei stark vergrößertem Abstand zwischen Brille und Kopf realisieren, was ebenfalls nicht akzeptabel ist.

Die erfolgversprechenderen Ansätze gehen daher vom dritten Prinzip aus, also von der Lichtführung im Brillenglas als Lichtleiter. Die Auskopplungsstruktur kann dabei als Beugungsgitter, als teiltransparenter, schräg gestellter Spiegel oder in Form von teiltransparenten Fresnelelementen ausgebildet sein. Im Falle eines Beugungsgitters wird der Strahlengang des elektronischen Bildes bspw. über das Beugungsmaximum der 1. Ordnung aus dem Brillenglas ausgekoppelt, während über das Beugungsmaximum der 0. Ordnung das Beobachtungslicht die Auskopplungsstruktur möglichst unbeeinträchtigt passieren kann.

In einem HMD, welches nach dem oben beschriebenen dritten Prinzip arbeitet, werden von einem Feldpunkt des vom einem Ausgangsbild dargestellten Feldes (im Folgenden Ausgangsbildfeld genannt) ausgehende divergente Strahlenbündel kollimiert und im Lichtleiter typischerweise als kollimierte Strahlenbündel geleitet. Der Durchmesser der Strahlenbündel wird dabei durch die Eintrittspupille der Abbildungsvorrichtung, von denen der Lichtleiter Teil ist, festgelegt. Die zentralen Strahlen der Strahlenbündel werden im Folgenden als Hauptstrahlen bezeichnet. Der Winkel zwischen den den linken und den rechten Rand des Ausgangsbildfeldes repräsentierenden Strahlenbündeln bzw. zwischen deren Hauptstrahlen wie er im Bereich der Austrittspupille gemessen wird, wird horizontaler Feldwinkel genannt. Als vertikaler Feldwinkel wird der im Bereich der Austrittspupille gemessene Winkel zwischen den die vertikalen Ränder des Ausgangsbildfeldes repräsentierenden Strahlenbündeln bzw. deren Hauptstrahlen bezeichnet. Im Falle eines großen Ausgangsbildfeldes treten große Feldwinkel auf - vornehmlich große horizontale Feldwinkel -, was insbesondere dann der Fall ist, wenn beispielsweise ein Bild in 16:9 Format dargestellt werden soll.

Um große Feldwinkel übertragen zu können, ist vorgeschlagen worden, unterschiedliche Feldbereiche eines Ausgangsbildes durch unterschiedliche Einkoppelstrukturen in den Lichtleiter einzukoppeln und durch unterschiedliche, den Einkoppelstrukturen entsprechende Auskoppelstrukturen aus dem Lichtleiter auszukoppeln, wobei die unterschiedlichen Feldbereiche jeweils in etwa den maximalen vom Lichtleiter übertragbaren Feldwinkel abdecken. Die Auskoppelstrukturen können dann so ausgestaltet sein, dass sie die von Lichtleiter übertragenen Lichtstrahlen der jeweiligen Bereiche in unterschiedliche Richtungen auskoppeln, so dass sie sich im Bereich der Austrittspupille wieder zu dem gesamten Feld des Ausgangsbildes überlagern. Eine solche Vorgehensweise wird auch Field Stitching genannt. Ein derartiges Field Stitching ist beispielsweise in US 2012/0062998 A1 und in WO 2017/102795 A1 beschrieben. Darüber hinaus ist es beispielsweise aus US 2010/0220295 A1, WO 2017/120334 A1 und WO 2017/120341 A1 bekannt, unterschiedliche diffraktive Ein- und Auskoppelstrukturen zu verwenden, um unterschiedliche Wellenlängenbereiche eines Farbbildes in einen Lichtleiter ein- und wieder auszukoppeln. Zum Auskoppeln unterschiedlicher Wellenlängenbereiche eines Farbbildes können auch gegeneinander verdrehte Gitterstrukturen zur Anwendung kommen, wie dies in WO 2017/120334 A1 und WO 2017/120341 A1 der Fall ist.

Die US 2017/0322426 A1 beschreibt ein Display mit diffraktiven optischen Elementen, die durch einen Beugungsvektor repräsentiert werden. Die beugenden Strukturen sind so ausgelegt, dass die Vektorsumme der Beugungsvektoren Null ist.

Beim Übertragen großer Felder, insbesondere von solchen Feldern mit großen vertikalen Feldwinkeln, besteht die Problematik, dass die Strahlenbündel im Lichtleiter von der Seite zur Auskoppelstruktur geleitet werden. Damit sich das Bildfeld für den Nutzer eines HMD weit genug nach oben erstreckt, beispielsweise um 20°, muss Licht vom oberen Bereich der Auskoppelstruktur ausgekoppelt werden. Entsprechend muss Licht, welches vom Nutzer des HMD als von unten kommend wahrgenommen wird, vom unteren Bereich der Auskoppelstruktur ausgekoppelt werden. Die Bezeichnungen oberer Bereich der Auskoppelstruktur und unterer Bereich der Auskoppelstruktur beziehen sich hierbei auf die Orientierung der Auskoppelstruktur, wenn sie sich im einem HMD vor dem Auge eines Nutzers befindet. Um von oben oder von unten kommend wahrgenommen zu werden, müssen die Strahlen die entsprechenden Auskoppelwinkel aufweisen. Wenn das Bildfeld beispielsweise einen vertikalen Feldwinkel von 40° aufweist, wobei Strahlenbündel mit Winkeln von -20° bis +20° auftreten, muss dafür gesorgt werden, dass Strahlenbündel mit Winkeln von -20° bis +20° aus der Auskoppelstruktur austreten können. Da die Strahlen mit Winkeln von -20° und die Strahlen mit Winkeln von +20° mit zunehmendem Abstand von der Austrittspupille zur Einkoppelstruktur zum Einkoppeln der Lichtstrahlen hin weiter auseinander laufen, wird im Bereich der Einkoppelstruktur eine entsprechende große Ausdehnung des Lichtleiters benötigt. Wenn der Lichtleiter als Brillenglas ausgebildet ist, kann dies dazu führen, dass die Höhe des Brillenglases zur Schläfe hin zunehmen muss, so dass die Oberkante des Brillenglases zur Schläfe hin ansteigt oder insgesamt sehr in den Stirnbereich hineinragen muss, was als ästhetisch unschön empfunden werden kann. Im Bereich der Unterkante ist diese Thematik weniger kritisch, jedoch sind andere Ausgestaltungen eines HMD denkbar, wo enge Grenzen für den Verlauf der Unterkante vorhanden sind, jedoch nicht für den Verlauf der Oberkante, beispielsweise wenn sich der Lichtleiter von einer helmartigen Struktur nach unten erstreckt.

Eine erste Aufgabe der vorliegenden Erfindung ist es daher, einen Lichtleiter für einen HMD zur Verfügung zu stellen, welcher auch bei großen vertikalen Feldwinkeln kompakte Abmessungen besitzen kann. Eine zweite Aufgabe der vorliegenden Erfindung ist es, ein HMD zur Verfügung zu stellen, welches auch bei großen vertikalen Feldwinkeln kompakte Lichtleiter aufweisen kann. Eine dritte Aufgabe der Erfindung ist es, ein Verfahren zum Übertragen eines Bildes in einem HMD zur Verfügung zu stellen, welches ein größere Flexibilität bei der Formgebung für den Lichtleiter ermöglicht.

Die erste Aufgabe wird durch einen Lichtleiter nach Anspruch 1 gelöst, die zweite Aufgabe durch ein HMD nach Anspruch 16 und die dritte Aufgabe durch ein Verfahren nach Anspruch 17. Die abhängigen Ansprüche enthalten vorteilhafte Ausgestaltungen der Erfindung.

Ein erfindungsgemäßer Lichtleiter zum Leiten von Licht für eine HMD ist zum Platzieren vor einem Auge vorgesehen und umfasst: Wenigstens eine Einkoppelstruktur zum Einkoppeln von Strahlen des durch den Lichtleiter geleiteten Lichtes in den Lichtleiter und wenigstens eine Auskoppelstruktur zum Auskoppeln der durch den Lichtleiter geleiteten Strahlen aus dem Lichtleiter. Die Auskoppelstruktur kann eine reflektive, eine refraktive oder eine diffraktive Auskoppelstruktur sein. Dabei sind die Strahlen jeweils durch Wellenvektoren $\mathbf{k}$ repräsentiert, die in einem Koordinatensystem mit einer x-Achse, einer y-Achse und einer z-Achse jeweils eine in der xz-Ebene verlaufende Komponente $\mathbf{k}_{xz}$ mit einem Betrag von $k_{xz}$ und eine y-Komponente $k_y$ aufweisen. Der Betrag der in der xz-Ebene verlaufenden Komponente $\mathbf{k}_{xz}$ beträgt damit

$$k_{xz} = \sqrt{k_x^2 + k_z^2}$$

. Das Koordinatensystem ist dabei ein Koordinatensystem, in dem sich, wenn der Lichtleiter vor dem Auge platziert ist, die vom Auge weg zeigende Normale des Lichtleiters im Zentrum der Auskoppelstruktur die z-Achse bildet, eine von temporal nach nasal verlaufende Achse die x-Achse bildet und eine von kaudal nach kranial verlaufende Achse die y-Achse bildet. Im Falle eines vor dem rechten Auge angeordneten Lichtleiters ist dieses Koordinatensystem ein rechtshändiges Koordinatensystem, im Falle eines vor dem linken Auge angeordneten Lichtleiters ein linkshändiges Koordinatensystem. Für die folgenden Betrachtungen bietet dies den Vorteil, dass die y-Achse in beiden Fällen dieselbe Orientierung aufweist.

Erfindungsgemäß ist die Auskoppelstruktur derart orientiert, dass für alle von der Auskoppelstruktur ausgekoppelten Strahlen, für die der Wellenvektor nach der Auskopplung ein negatives Verhältnis $k_y/k_{xz}$ aufweist, der Wellenvektor im Lichtleiter ein Verhältnis von $k_y/k_{xz} > -0{,}2$ aufweist. Dabei kann das Verhältnis $k_y/k_{xz}$ des Wellenvektors im Lichtleiter insbesondere auch positiv sein. Zusätzlich oder alternativ ist die Auskoppelstruktur derart orientiert, dass für alle von der Auskoppelstruktur ausgekoppelten Strahlen, für die der Wellenvektor nach der Auskopplung ein positives Verhältnis $k_y/k_{xz}$ aufweist, der Wellenvektor im Lichtleiter ein Verhältnis von $k_y/k_{xz}$ kleiner $+0{,}2$ aufweist. Dabei kann das Verhältnis $k_y/k_{xz}$ des Wellenvektors im Lichtleiter insbesondere auch negativ sein. Insbesondere ist es vorteilhaft, wenn die Auskoppelstruktur derart orientiert ist, dass für alle von der Auskoppelstruktur ausgekoppelten Strahlen, für die der Wellenvektor nach der Auskopplung ein negatives Verhältnis $k_y/k_{xz}$ aufweist, der Wellenvektor im Lichtleiter ein Verhältnis von $k_y/k_{xz} > 0$ aufweist und/oder dass für alle von der Auskoppelstruktur ausgekoppelten Strahlen, für die der Wellenvektor nach der Aus-kopplung ein positives Verhältnis $k_y/k_{xz}$ aufweist, der Wellenvektor im Lichtleiter ein Verhältnis von $k_y/k_{xz} < 0$ aufweist. Das Verhältnis $k_y/k_{xz}$ entspricht dem Tangens des Winkels des Wellenvektors $k$ zur xz-Ebene, die bei geradeaus schauendem Auge im Wesentlichen der horizontalen Ebene entspricht. Ein negatives Verhältnis entspricht somit einem negativen Winkel, so dass der entsprechende Wellenvektor in dem beschriebenen Koordinatensystem als von oben kommend wahrgenommen wird. Ein positives Verhältnis entspricht somit einem positiven Winkel, so dass der entsprechende Wellenvektor in dem beschriebenen Koordinatensystem als von unten kommend wahrgenommen wird.

Mit dem erfindungsgemäßen Lichtleiter lässt sich das erfindungsgemäße Verfahren zum Übertragen eines Bildes in einem HMD mittels eines Lichtleiters realisieren, wobei der Lichtleiter im HMD zum Platzieren vor einem Auge vorgesehen ist und die das zu übertragende Bild repräsentierenden Strahlen jeweils durch Wellenvektoren $k$ repräsentiert sind, die bei vor dem Auge platzierten Lichtleiter in einem von der Sehachse als z-Achse, einer von temporal nach nasal verlaufenden x-Achse und einer von caudal nach cranial verlaufenden y-Achse gebildeten Koordinatensystem jeweils eine x-Komponente, eine y-Komponente und eine z-Komponente aufweisen und wobei die Gesamtheit der x-Komponenten und der y-Komponenten der Wellenvektoren $k$ der das zu übertragende Bild repräsentierenden Strahlen ein Winkelspektrum des zu übertragenden Bildes bilden. Mit Hilfe des erfindungsgemäßen Lichtleiters kann das Winkelspektrum des zu übertragenden Bildes im Inneren des Lichtleiters im Vergleich zum Winkelspektrum des zu übertragenden Bildes außerhalb des Lichtleiters entlang der y-Achse verschoben transportiert werden. Dabei besteht auch die Möglichkeit, das Winkelspektrum des zu übertragenden Bildes in wenigstens zwei Teile zu teilen und die beiden Teile des Winkelspektrums im Inneren des Lichtleiters im Vergleich zum Winkelspektrum des zu übertragenden Bildes außerhalb des Lichtleiters entlang der y-Achse unterschiedlich verschoben zu transportieren. Die beiden Teile des Winkelspektrums können dabei außerhalb des Lichtleiters insbesondere in Richtung der y-Achse übereinander angeordnet sein. Das erfindungsgemäße Verfahren ermöglicht eine große Flexibilität bei der Formgebung für den Lichtleiter, da die Lage des Winkelspektrums in Inneren des Lichtleiters an die jeweilige Form des Lichtleiters, insbesondere an die jeweiligen Verläufe der Ober- und Unterkanten des Lichtleiters angepasst werden kann.

Durch die erfindungsgemäße Orientierung der Auskoppelstruktur wird es möglich, Strahlenbündel, die in einem großen vertikalen Austrittswinkel zur Austrittspupille des Lichtleiters verlaufen, im Lichtleiter mit erheblich kleineren Winkeln zu leiten. Dadurch kann der Lichtleiter kompakt ausgestaltet werden, was es ermöglicht, beispielsweise bei einem als Brillenglas ausgebildeten Lichtleiter eine ästhetische Form der Brillenglasoberkante und/oder der Brillenunterkante zu erreichen.

Der erfindungsgemäße Lichtleiter kann wenigstens zwei Einkoppelstrukturen aufweisen, die jeweils eine von zwei voneinander verschiedenen Teilmengen an Strahlen des durch den Lichtleiter geleiteten Lichts einkoppeln. Dabei weist der Lichtleiter auch wenigstens zwei Auskoppelstrukturen auf, wobei jede der Auskoppelstrukturen einer der Einkoppelstrukturen derart zugeordnet ist, dass sie die von der entsprechenden Einkoppelstruktur eingekoppelte Teilmenge an Strahlen aus dem Lichtleiter auskoppelt. Eine derartige Ausgestaltung des Lichtleiters ermöglicht das in der Einleitung erwähnte Field Stitching, welches es in Kombination mit der erfindungsgemäßen Orientierung der Auskoppelstruktur ermöglicht, besonders kompakte Lichtleiter zur Verfügung zu stellen. Die Teilmengen an Strahlen repräsentieren dabei jeweils einen anderen einen Teil des Winkelspektrums eines zu übertragenden Bildes.

Im Falle des Lichtleiters mit wenigstens zwei Einkoppelstrukturen und wenigstens zwei Auskoppelstrukturen können sich die Teilmengen an Strahlen in den Wertebereichen, in denen die x-Komponenten $k_x$ der sie repräsentierenden Wellenvektoren $k$ liegen, voneinander unterscheiden. Jede der Auskoppelstrukturen ist dann jeweils derart orientiert, dass für all diejenigen Strahlen der von ihr ausgekoppelten Teilmenge an Strahlen, deren Wellenvektor nach der Auskopplung durch die Auskoppelstruktur ein negatives Verhältnis $k_y/k_{xz}$ aufweist, der Wellenvektor im Lichtleiter ein Verhältnis von $k_y/k_{xz} > -0{,}2$ und insbesondere $> 0$ aufweist und/oder dass für all diejenigen Strahlen, der von ihr ausgekoppelten Teilmenge an Strahlen, deren Wellenvektor nach der Auskopplung durch die Auskoppelstruktur ein positives Verhältnis $k_y/k_{xz}$ aufweist, der Wellenvektor im Lichtleiter ein Verhältnis von $k_y/k_{xz} < +0{,}2$, insbesondere $< 0$ aufweist. In dieser Ausgestaltung ist das Feld des Ausgangsbildes beim Leiten durch den Lichtleiter in zwei Feldbereiche aufgeteilt, die sich in den x-Komponenten der Wellenvektoren ihrer Strahlen voneinander unterscheiden. Eine derartige Aufteilung entspricht einer horizontalen Aufteilung des Feldes auf dem Ausgangsbild. Für beide Feldteile ist dabei die Orientierung der Auskoppelstruktur erfindungsgemäß gewählt.

Zusätzlich oder alternativ besteht auch die Möglichkeit, dass in einem Lichtleiter mit wenigstens zwei Einkoppelstrukturen und wenigstens zwei Auskoppelstrukturen (welche auch wenigstens zwei Bereiche einer einzigen Auskoppelstruktur sein können) eine der Teilmengen an Strahlen umfasst, die nach dem Auskoppeln negative y-Komponenten $k_y$ der sie repräsentierenden Wellenvektoren $k$ besitzen, und eine andere der Teilmengen an Strahlen umfasst, die nach dem Auskoppeln positive y-Komponenten $k_y$ der sie repräsentierenden Wellenvektoren $k$ besitzen. In diesem Fall repräsentieren die Teilmengen an Strahlen Teile des Winkelspektrums des zu übertragenden Bildes, außerhalb des Lichtleiters in Richtung der der y-Achse übereinander angeordnet sind. Die Werte der y-Komponenten $k_y$ der Wellenvektoren der beiden Teilmengen besitzen dabei keinen oder nur einen kleinen Überlapp. Als kleiner Überlapp soll dabei ein Überlapp von weniger als 10 % der jeweiligen Wellenvektoren, vorzugsweise von weniger als 5 % der jeweiligen Wellenvektoren angesehen werden. Diejenige Auskoppelstruktur, welche die Teilmenge an Strahlen auskoppelt, die Strahlen umfasst, welche nach dem Auskoppeln negative y-Komponenten $k_y$ der sie repräsentierenden Wellenvektoren **k** besitzen, ist derart orientiert, dass für alle Strahlen der entsprechenden Teilmenge an Strahlen, für die der Wellenvektor nach der Auskopplung durch die Auskoppelstruktur ein negatives Verhältnis $k_y/k_{xz}$ besitzt, der Wellenvektor im Lichtleiter ein Verhältnis von $k_y/k_{xz} > -0{,}2$, insbesondere $> 0$ aufweist. Außerdem ist diejenige Auskoppelstruktur, welche die Teilmenge an Strahlen auskoppelt, die Strahlen umfasst, welche nach dem Auskoppeln positive y-Komponenten $k_y$ der sie repräsentierenden Wellenvektoren **k** besitzen, derart orientiert, dass für alle Strahlen der entsprechenden Teilmenge an Strahlen, für die der Wellenvektor nach der Auskopplung durch die Auskoppelstruktur ein positives Verhältnis $k_y/k_{xz}$ besitzt, der Wellenvektor im Lichtleiter ein Verhältnis von $k_y/k_{xz} < +0{,}2$, insbesondere $< 0$ aufweist. In dieser Ausgestaltung dient die Teilung des Feldes dazu, einerseits Strahlen, die unter großen negativen Winkeln aus dem Lichtleiter ausgekoppelt werden, im Lichtleiter unter kleinen negativen Winkeln oder positiven Winkeln zu führen. Andererseits werden Strahlenbündel, die von der Auskoppelstruktur unter großen positiven Winkeln ausgekoppelt werden, im Lichtleiter unter kleinen positiven Winkeln oder negativen Winkeln geleitet. Dies ermöglicht es, Lichtleiter mit geringem Abstand zwischen der Oberkante und der Unterkante des Lichtleiters herzustellen und gleichzeitig große vertikale Felder zu übertragen. Dabei können die Strahlengänge zu den beiden Auskoppelstrukturen auch über Kreuz geführt werden, so dass diejenigen Strahlenbündel, die unter einem großen positiven Winkel von der Auskoppelstruktur ausgekoppelt werden, unter einem negativen Winkel im Lichtleiter verlaufen und umgekehrt.

Im erfindungsgemäßen Lichtleiter können wenigstens manche der Teilmengen an Strahlen statt unterschiedlicher Bereiche des Ausgangsbildes jeweils einen anderen Wellenlängenbereich des durch den Lichtleiter geleiteten Lichtes repräsentieren. Zudem besteht die Möglichkeit, dass der Lichtleiter wenigstens zwei Unterlichtleiter umfasst, wobei jeder der Unterlichtleiter wenigstens eine Einkoppelstruktur und eine Auskoppelstruktur aufweist. Durch die Verwendung von Unterlichtleitern können die Teilmengen an Strahlen beim Leiten durch den Lichtleiter zuverlässig voneinander getrennt werden, so dass ein Übersprechen vermieden werden kann.

Zudem kann der Lichtleiter oder wenigstens ein Unterlichtleiter wenigstens zwei Einkoppelstrukturen und zwei Auskoppelstrukturen aufweisen. Dabei ist dann jede der Auskoppelstrukturen einer der Einkoppelstrukturen zugeordnet. Außerdem sind die Einkoppelstrukturen und die Auskoppelstrukturen derart relativ zueinander angeordnet, dass die von einer der Einkoppelstrukturen eingekoppelten Strahlen im Lichtleiter nicht auf eine einer anderen Einkoppelstruktur zugeordnete Auskoppelstruktur treffen. Dies ermöglicht eine räumliche Trennung der Teilmengen an Strahlen, die durch denselben Lichtleiter bzw. denselben Unterlichtleiter geleitet werden. Auch diese geometrische Trennung der Strahlführung im Lichtleiter bzw. im Unterlichtleiter ermöglicht es, ein Übersprechen zu vermeiden. Eine weitere Möglichkeit, das Übersprechen zu vermeiden besteht darin, dass der Lichtleiter oder wenigstens ein Unterlichtleiter wenigstens zwei Einkoppelstrukturen und zwei Auskoppelstrukturen aufweist, wobei jede der Auskoppelstrukturen einer der Einkoppelstrukturen zugeordnet ist und wobei sich die von den jeweiligen Auskoppelstrukturen ausgekoppelten Strahlen durch die Bereiche, in denen ihre Auftreffwinkel auf die Auskoppelstrukturen liegen, voneinander unterscheiden. Diese Ausgestaltung ermöglicht es das Übersprechen selbst dann zu vermeiden, wenn die Teilmengen an Strahlen überlappend durch denselben Abschnitt des Lichtleiters bzw. des Unterlichtleiters übertragen werden. Die Selektion der richtigen Teilmengen an Strahlen erfolgt dabei durch den Auftreffwinkel auf die Auskoppelstrukturen, die in diesem Fall beispielsweise als Volumenhologramme realisiert sein können.

Im erfindungsgemäßen Lichtleiter ist es vorteilhaft, wenn sich für einen ausgekoppelten Strahl das Verhältnis $k_y/k_{xz}$ seines Wellenvektors nach der Auskopplung vom Verhältnis $k_y/k_{xz}$ seines Wellenvektors vor der Auskopplung betragsmäßig wenigstens um 0,1 voneinander unterscheiden, vorzugsweise wenigstens um 0,2 und insbesondere wenigstens um 0,3. Zusätzlich oder alternativ ist es vorteilhaft, wenn sich für einen ausgekoppelten Strahl des Verhältnis $k_y/k_{xz}$ seines Wellenvektors nach der Auskopplung vom Verhältnis $k_y/k_{xz}$ seines Wellenvektors vor der Auskopplung betragsmäßig höchstens um 0,9 voneinander unterscheiden, vorzugsweise höchstens um 0,6 und insbesondere höchstens um 0,4.

In einer vorteilhaften Weiterbildung des Lichtleiters sind die einzelnen Ein- und Auskoppelstrukturen derart ausgebildet, dass die ausgekoppelten Strahlen einen bestimmten Abschnitt oder mehrere bestimmte Abschnitte einer in einem bestimmten Abstand hinter der Auskoppelstruktur befindlichen Fläche nicht ausleuchten. Diese Fläche kann mit der Austrittspupille identifiziert werden, die in der beschriebenen Ausgestaltung des Lichtleiters beschnitten wird. Hintergrund ist, dass bestimmte Bereiche großer Bildfelder beispielsweise von der Nase verdeckt sein können, so dass bei einem Blickwinkel in Richtung auf die Nase der entsprechende Feldbereich nicht wahrgenommen werden kann. Ein nicht wahrgenommener Feldbereich braucht jedoch durch den Lichtleiter nicht übertragen zu werden. Durch das Weglassen der Übertragung nicht sichtbarer Feldbereiche kann der Wellenleiter noch kompakter ausgestaltet werden.

Im erfindungsgemäßen Lichtleiter kann wenigstens zwischen einer der vorhandenen Einkoppelstrukturen und der dieser Einkoppelstruktur zugeordneten Auskoppelstruktur eine beugende oder reflektierende Struktur angeordnet sein. Diese zusätzliche beugende oder reflektierende Struktur ermöglicht es, eine Einkoppelstruktur mit einer bestimmten Orientierung einer Auskoppelstruktur zuzuordnen, die sich in ihrer Orientierung von der Einkoppelstruktur unterscheidet. Die dadurch entstehende Fehlanpassung zwischen der Einkoppelstruktur und der Auskoppelstruktur wird dann durch die zusätzliche beugende oder reflektierende Struktur ausgeglichen.

Wenigstens eine der Auskoppelstrukturen kann ein Auskoppelgitter sein, das einen Gittervektor aufweist. Für die von dem Auskoppelgitter ausgekoppelten Strahlen ergibt sich dann der Wellenvektor eines ausgekoppelten Strahls durch die vektorielle Summe aus dem Wellenvektor des Strahls vor dem Auftreffen auf das Auskoppelgitter und dem Gittervektor. Statt als Auskoppelgitter besteht die Möglichkeit, eine Auskoppelstruktur als reflektive Fläche auszugestalten. Noch eine weitere Alternative ist es, wenigstens eine der Auskoppelstrukturen als Volumenhologramm auszugestalten. Je nach Auskoppelstruktur kann die Einkoppelstruktur eine entsprechend angepasste Struktur sein, das heißt, im Falle eines Auskoppelgitters ist die Einkoppelstruktur ein Einkoppelgitter, im Falle eines Auskoppelspiegels, ein Einkoppelspiegel und im Falle eines Volumenhologramms, ein Volumenhologramm.

Erfindungsgemäß wird außerdem ein HMD mit einem erfindungsgemäßen Lichtleiter zur Verfügung gestellt. Dabei kann der Lichtleiter auch eine Krümmung aufweisen, insbesondere eine Krümmung mit einem Krümmungsradius im Bereich von 75 bis 150 mm. Krümmungsradien in diesem Bereich sind einerseits angenehm und andererseits im Hinblick auf die Abbildungsqualität der Abbildungsoptik vertretbar. Andere Krümmungsradien würden entweder zu Lasten der Ergonomie oder zu Lasten der Abbildungsqualität gehen. Die Eigenschaften der erfindungsgemäßen HMDs sowie dessen Vorteile ergeben sich unmittelbar aus den bereits beschriebenen Eigenschaften und Vorteilen des Lichtleiters.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Figur 1    zeigt ein HMD in einer schematischen Darstellung.

Figur 2    zeigt den seitlichen Neigungswinkel eines Brillenglases.

Figur 3    zeigt den pantoskopischen Winkel eines Brillenglases.

Figur 4    zeigt eine Skizze zur Erläuterung der im Lichtleiter übertragbaren Wellenvektoren sowie der Auskopplung von Lichtstrahlen aus dem Lichtleiter.

Figur 5    zeigt das Verhältnis zwischen Eye-Box und dem Auskoppelbereich eines Leitleiters.

Figur 6    zeigt in einer schematischen Darstellung eine Auskoppelstruktur eines Lichtleiters sowie die Projektion der Eye-Box auf die Auskoppelstruktur.

Figur 7    zeigt die Position der Auskoppelstruktur in typischen Brillengläsern.

Figur 8    zeigt den Verlauf von Lichtstrahlen zu der Auskoppelstruktur im Lichtleiter.

Figur 9    zeigt anhand einer eine Skizze ein erstes Beispiel für die Übertragung von Wellenvektoren im erfindungsgemäßen Lichtleiter sowie für die Ein- und Auskopplung von Lichtstrahlen aus dem Lichtleiter.

Figur 10    zeigt anhand einer eine Skizze ein zweites Beispiel für die Übertragung von Wellenvektoren im erfindungsgemäßen Lichtleiter sowie für die Ein- und Auskopplung von Lichtstrahlen aus dem Lichtleiter.

Figur 11    zeigt anhand einer eine Skizze ein drittes Beispiel für die Übertragung von Wellenvektoren im erfindungsgemäßen Lichtleiter sowie für die Ein- und Auskopplung von Lichtstrahlen aus dem Lichtleiter.

Figur 12    zeigt anhand einer Skizze die Aufteilung eines Winkelspektrums im Falle von Field Stitching.

Figur 13    zeigt anhand der Skizze aus Figur 11 einen ersten Teil des Winkelspektrums zur Erläuterung seiner Übertragung sowie seiner Ein- und Auskopplung.

Figur 14    zeigt anhand der Skizze aus Figur 11 einen zweiten Teil des Winkelspektrums zur Erläuterung seiner Übertragung sowie seiner Ein- und Auskopplung.

Figur 15    zeigt einen Lichtleiter mit drei Unterlichtleitern, welche jeweils einen anderen Teil des Winkelspektrums übertragen.

Figur 16    zeigt die gemeinsame Übertragung von durch unterschiedliche Einkoppelelemente in denselben Lichtleiter eingekoppelten und unterschiedliche Teile des Winkelspektrums repräsentierenden Lichtstrahlen.

Figur 17    zeigt einen in der Austrittspupille ausgeblendeten Bereich.

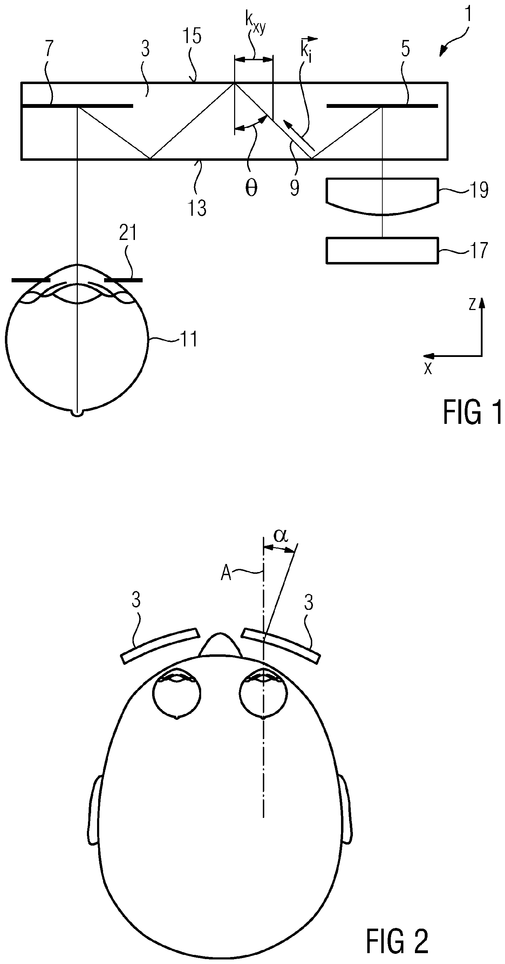

Bevor eine nähere Erläuterung der vorliegenden Erfindung erfolgt, wird nachfolgend mit Bezug auf die Figuren 1 bis 12 auf die Grundprinzipien eines Lichtleiters für ein HMD eingegangen.

Figur 1 zeigt ein HMD in einer schematischen Ansicht von oben, also von einer Position oberhalb des Kopfes aus gesehen. Das HMD 1 umfasst einen Lichtleiter 3, in dem eine Einkoppelstruktur 5 und eine Auskoppelstruktur 7 eingebettet sind. Im vorliegenden Ausführungsbeispiel finden diffraktive Ein- und Auskoppelstrukturen Verwendung, es können jedoch auch reflektive Ein- und Auskoppelstrukturen Verwendung finden.

Mit Hilfe der Einkoppelstruktur 5 werden Lichtstrahlen in den Lichtleiter eingekoppelt, die in Figur 1 schematisch unter der Bezugsziffer 9 eingezeichnet sind. Im Lichtleiter 3 werden die Lichtstrahlen mit Hilfe von Totalreflexionen an einer dem Auge 11 eines das HMD tragenden Nutzers zugewandten Innenfläche und einer vom Auge 11 abgewandten Außenfläche zu der Auskoppelstruktur 17 geleitet. Von der Auskoppelstruktur werden die Lichtstrahlen schließlich in Richtung auf das Auge 11 aus dem Lichtleiter ausgekoppelt.

Ausgangspunkt der durch den Lichtleiter geleiteten Lichtstrahlen ist ein auf einem Display 17 dargestelltes Ausgangsbild, dessen Pixel jeweils divergente Strahlenbündel aussenden, die im dargestellten Beispiel von einer zwischen dem Display 17 und der Einkoppelstruktur 5 angeordneten Abbildungsoptik 19 kollimiert werden und als kollimierte Strahlenbündel in den Lichtleiter eingekoppelt werden.

Insofern im Lichtleiter von reflektierten Lichtstrahlen die Rede ist, sollen dabei die Lichtstrahlen der eingekoppelten Strahlenbündel zu verstehen sein, wobei die Strahlenbündel in den Figuren jeweils durch ihren Hauptstrahl repräsentiert werden. Der Begriff Hauptstrahl bezeichnet dabei den zentralen Strahl eines Strahlenbündels. Die Richtung des Hauptstrahls gibt dabei die Richtung des Strahlenbündels an. Im Falle eines kollimierten Strahlenbündels verlaufen die übrigen Strahlen des Strahlenbündels im Wesentlichen parallel zum Hauptstrahl, so dass der Hauptstrahl repräsentativ für die Strahlen eines Strahlenbündels ist. Im Falle eines nicht kollimierten Strahlenbündels spannen die Strahlen des Strahlenbündels eine definierten Raumwinkel ein, in dessen Zentrum der Hauptstrahl verläuft.

Alle von der aus dem Lichtleiter 3 und der Abbildungsoptik 19 gebildeten Abbildungsvorrichtung übertragenen Strahlenbündel verlaufen durch die Eintrittspupille und die Austrittspupille dieser Abbildungsvorrichtung. Die Eintrittspupille ist von der Aperturblende der Abbildungsvorrichtung oder von einem Bild der Aperturblende, welches von vor der Aperturblende gelegenen abbildenden optischen Elemente erzeugt wird, gebildet. Im vorliegenden, schematischen Ausführungsbeispiel ist sie durch die Öffnung der schematisch eingezeichneten Linse 19 gegeben. Die Austrittspupille ist das Bild der Aperturblende, welches durch die auf die Aperturblende folgenden abbildenden optischen Elemente gebildet wird. In einem HMD sind die abbildenden optischen Elemente derart angeordnet und ausgebildet, das die Austrittspupille an der Stelle liegt, an der sich die Augenpupille befindet, wenn das HMD am Kopf getragen wird. Die Austrittspupille ist in Figur 1 mit der Bezugsziffer 21 gekennzeichnet. Zwar ist bei HMDs die Eye-Box eine oft beschriebene Größe, wobei als Eye-Box derjenige dreidimensionale Bereich der Strahlenbündel bezeichnet wird, in dem sich die Augenpupille bewegen kann, ohne dass eine Vignettierung des Bildes erfolgt. Da bei einem HMD der Abstand des Auges vom Lichtleiter im Wesentlichen konstant ist, kann die Eye-Box jedoch auf eine zweidimensionale Fläche reduziert werden, welche lediglich die Drehbewegungen des Auges berücksichtigt. Diese reduzierte Eye-Box entspricht im Wesentlichen der Austrittspupille des HMDs. Es wird daher im Rahmen der vorliegenden Beschreibung lediglich die Austrittspupille 21 betrachtet.

Als Einkoppelstruktur 5 und Auskoppelstruktur 7 kommen im vorliegenden Ausführungsbeispiel Beugungsgitter zur Anwendung. Dabei werden die Lichtstrahlen über das Beugungsmaximum der ersten Ordnung in das Brillenglas ein- bzw. aus dem Brillenglas ausgekoppelt, während über das Beugungsmaximum der nullten Ordnung das Beobachtungslicht die Einkoppelstruktur und die Auskoppelstruktur möglichst unbeeinträchtigt passiert. Grundsätzlich können aber auch andere Beugungsordnungen anstelle der ersten Beugungsordnung zum Ein- und Auskoppeln herangezogen werden. Anstatt der Beugungsgitter können aber auch schräg gestellte, teilreflektierte Spiegel oder reflektive Fresnelstrukturen Verwendung finden, so dass das Ein- und Auskoppeln durch Reflektion anstatt durch Beugung erfolgt.

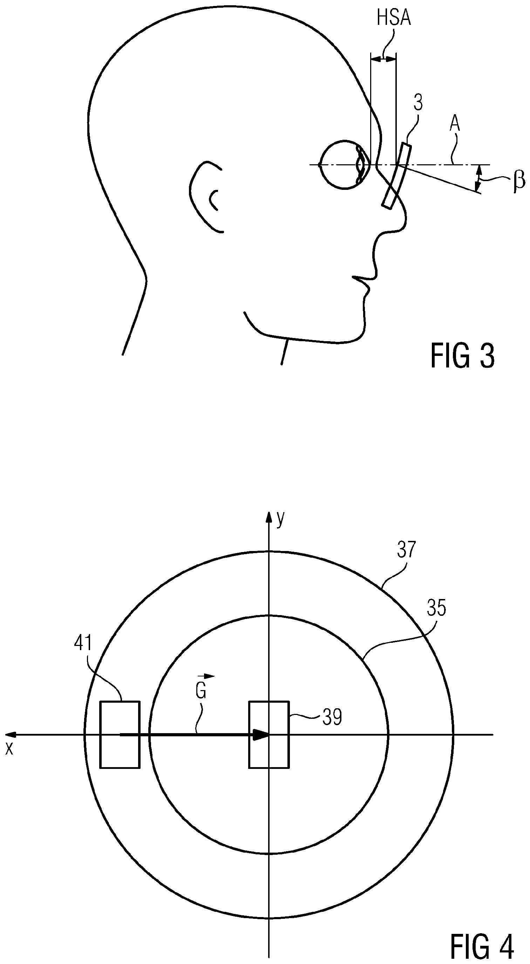

Ein HMD, wie es schematisch in Figur 1 dargestellt ist, kann insbesondere in Form einer Datenbrille realisiert sein. Der Lichtleiter 3 des HMDs 1 aus Figur 1 ist dann als Brillenglas ausgestaltet. Ein derartiges HMD ist schematisch in den Figuren 2 und 3 dargestellt, die der Übersichtlichkeit halber von der Datenbrille lediglich die Brillengläser, das heißt die Lichtleiter 3 zeigen. Figur 2 illustriert dabei den seitlichen Neigungswinkel $\alpha$ eines Brillenglases bezüglich der Hauptsehachse A des rechten Auges. Für einen guten ästhetischen Eindruck wird jedes Brillenglas 3 zur jeweiligen Seite in Richtung der Ohren geneigt. Der Neigungswinkel wird als Fassungsscheibenwinkel oder Wrap-Winkel bezeichnet und ist bevorzugt in einem Bereich von 5° bis 20° gewählt, wobei als sportlich betrachtete Brillen eher größere Fassungsscheibenwinkel aufweisen als andere Brillen. In den im Rahmen dieser Beschreibung dargestellten Ausführungsbeispielen ist ein Fassungsscheibenwinkel von 12° gewählt.

In Figur 3 ist der horizontale Neigungswinkel β des Brillenglases 3 bezüglich der Hauptsehachse A des rechten Auges dargestellt. Für einen guten ästhetischen Eindruck wird jedes Brillenglas 3 leicht nach unten geneigt. Dieser Winkel wird auch als pantoskopischer Winkel bezeichnet und ist bevorzugt in einem Bereich von 5° bis 20° gewählt, wobei als sportlich betrachtete Brillen eher größere Winkel aufweisen. In den im Rahmen dieser Beschreibung vorgestellten Ausführungsbeispielen beträgt der pantoskopische Winkel 8°.

Zudem sind Brillengläser in der Regel für einen bestimmten Abstand ihrer Rückfläche, also der Innenfläche 13 des Lichtleiters 3, zur Hornhaut ausgelegt. Dieser Abstand, der Hornhaut-Scheitelabstand (in Figur 3 als HSA bezeichnet) genannt wird und entlang der Hauptsehachse A gemessen wird, sollte mehr als 10 mm betragen, bevorzugt etwa 15 mm, damit die Wimpern nicht am Brillenglas 3 anschlagen. Ein zu großer Abstand von mehr als 20 mm wird hingegen als unschön empfunden und ist daher nicht bevorzugt. In den in der vorliegenden Beschreibung vorgestellten Ausführungsbeispielen beträgt der Hornhaut-Scheitelabstand 15 mm.

Im Rahmen der vorliegenden Erfindung wird von einem Koordinatensystem ausgegangen, wie es in Figur 1 eingezeichnet ist. In diesem Koordinatensystem verläuft die z-Achse in Blickrichtung, und die x-Achse verläuft von temporal nach nasal, was bei einem geradeaus schauenden Auge im Wesentlichen der horizontalen Richtung entspricht. Die y-Achse zeigt in Figur 1 aus der Bildebene heraus und zeigt somit im Falle eines geradeaus blickenden Auges im Wesentlichen vertikal nach oben. Dadurch, dass die x-Richtung von temporal nach nasal definiert ist und die y-Richtung aus der Blattebene herausschaut, ergibt sich im Falle eines Lichtleiters für das rechte Auge, wie er in Figur 1 dargestellt ist, ein rechtshändiges Koordinatensystem. Im Falle eines Lichtleiters für das linke Auge ergibt sich dagegen bei einer von temporal nach nasal verlaufenden x-Richtung und einer aus der Blattebene herausführenden y-Richtung ein linkshändiges Koordinatensystem. Die gewählte Konvention hat jedoch den Vorteil, dass in beiden Fällen die y-Achse in dieselbe Richtung zeigt, was die nachfolgenden Betrachtungen vereinfacht.

Mit dem Lichtleiter 1 soll ein möglichst großer Feldwinkel übertragen werden, damit mit dem HMD große Bildfelder dargestellt werden können. Aus ästhetischen Gesichtspunkten ist dabei eine Einkopplung von der Seite gegenüber einer Einkopplung von oben bevorzugt. Damit ein bestimmter Lichtstrahl übertragen werden kann, muss er in einer Art und Weise auf die Einkoppelstruktur auftreffen, dass der durch die Einkoppelstruktur reflektierte oder gebeugte Strahl im Lichtleiter die Bedingung für Totalreflexion erfüllt. Mit anderen Worten, der reflektierte oder gebeugte Strahl muss bei seinem Auftreffen auf die Innenfläche und die Außenfläche jeweils einen Winkel zur Flächennormalen aufweisen, der größer als der Grenzwinkel für die Totalreflexion ist. Mit den bestehenden Technologien für Einkoppelstrukturen lässt sich jedoch nur ein bestimmter Winkelbereich derart einkoppeln, dass im Lichtleiter die Bedingung für Totalreflexion erfüllt ist. Dieser Winkelbereich beschränkt den Feldwinkel eines in den Lichtleiter einzukoppeln Bildes. Dies gilt insbesondere für die horizontale Bildrichtung. Die genannte Beschränkung wird nachfolgend mit Bezug auf Figur 4 erläutert.

Für die nachfolgenden Betrachtungen werden die Leitung der Lichtstrahlen im Lichtleiter sowie die Einkopplung in den Lichtleiter und die Auskopplung aus dem Lichtleiter im k-Raum, also im Raum der Wellenvektoren, betrachtet. Ein Wellenvektor ist dabei eine Größe aus der Wellenoptik und stellt einen Vektor dar, der in Normalenrichtung auf der Wellenfront steht. Der Betrag des Wellenvektors ergibt sich aus der Division von $2\pi$ durch die Wellenlänge $\lambda$ des Lichtes. In der geometrischen Optik entspricht die Richtung des Wellenvektors der Ausbreitungsrichtung der Lichtstrahlen.

Figur 4 zeigt ein kartesisches Koordinatensystem im Wellenvektorraum (im Folgenden als k-Raum bezeichnet), dessen Achsen parallel zu dem Koordinatensystem aus Figur 1 verlaufen. Entlang der x-Achse ist dabei der Wert der x-Komponente $k_x$ eines Wellenvektors $\mathbf{k}$ aufgetragen, entlang der y-Achse ist der Wert der y-Komponente $k_y$ des Wellenvektors $\mathbf{k}$ aufgetragen und entlang der z-Achse (in Figur 4 nicht dargestellt) wäre die z-Komponente $k_z$ des Wellenvektors $\mathbf{k}$ aufgetragen. Für die nachfolgenden Betrachtungen ist jedoch in erster Linie die Projektion $\mathbf{k}_{xy}$ des Wellenvektors $\mathbf{k}$ in die xy-Ebene von Bedeutung.

Die Bedingung für Totalreflexion ist, dass der Einfallswinkel auf eine Grenzfläche zu einem optisch dünneren Medium einen bestimmten Grenzwinkel überschreitet. Der Grenzwinkel ist dabei durch die Gleichung

$$\theta_G = \arcsin(n_2/n_1) \qquad (1)$$

gegeben, wobei $n_1$ für den Brechungsindex des Lichtleitermaterials und $n_2$ für den Brechungsindex des an den Lichtleiter angrenzenden optisch dünneren Mediums steht. Mit Luft als optisch dünnerem Medium, wie es bei der Innenfläche 13 und der Außenfläche 15 des Lichtleiters aus Figur 1 der Fall ist, kann für $n_2$ der Wert 1 eingesetzt werden, so dass sich die Gleichung (1) zu

$$\theta_G = \arcsin(1/n) \qquad (2)$$

vereinfacht, wobei n für den Brechungsindex des Lichtleitermaterials steht.

Für einen Wellenvektor $\mathbf{k}_a$ außerhalb des Lichtleiters 3 ist sein Betrag $k_a$ durch die Gleichung

$$k_a = 2\pi/\lambda \qquad (3)$$

mit $\lambda$ der Wellenlänge des Lichtes gegeben. Beim Eintritt des Lichtes in den Lichtleiter 1 verändert sich der Wellenvektor $\mathbf{k}_a$ außerhalb des Lichtleiters 3 aufgrund der beim Eintritt stattfindenden Brechung zum Wellenvektor $\mathbf{k}_i$ im Inneren des Lichtleiters 3. Der Betrag $k_i$ des Wellenvektors $\mathbf{k}_i$ im Lichtleiter ergibt sich aus dem Betrag $k_a$ des Wellenvektors $\mathbf{k}_a$ außerhalb des Lichtleiters durch Multiplikation mit dem Brechungsindex, so dass gilt

$$k_i = n \times k_a. \qquad (4)$$

Damit an der Innenfläche 13 oder der Außenfläche 15 Totalreflexion stattfinden kann, muss der Einfallswinkel $\theta$ eines Lichtstrahls bzw. des zugehörigen Wellenvektors $\mathbf{k}$ auf die entsprechende Fläche größer als der Grenzwinkel $\theta_G$ aus Gleichung (2) sein. In dem in Figur 1 verwendeten Koordinatensystem kann die Bedingung für das Auftreten von Totalreflexion auf der Basis des Betrags der Projektion des Wellenvektors $\mathbf{k}_i$ im Inneren des Lichtleiters 3 auf die xy-Ebene umformuliert werden. Der Betrag der Projektion des Wellenvektors $\mathbf{k}_i$ im Inneren des Lichtleiters 3 auf die xy-Ebene ist durch

$$k_{ixy} = k_i \times \sin\theta \qquad (5)$$

gegeben. Damit Totalreflexion auftreten kann, muss $\theta$ größer als der Grenzwinkel $\theta_G$ aus Gleichung (2) sein, was durch die Bedingung

$$\theta \geq \theta_G = \arcsin(1/n) \qquad (6)$$

ausgedrückt ist. Setzt man die Bedingung (6) in Gleichung (5) ein, so erhält man für den Betrag der Projektion $k_{ixy}$ des Wellenvektors $\mathbf{k}_i$ im Inneren des Lichtleiters auf die xy-Ebene als Bedingung für das Auftreten von Totalreflexion

$$k_{ixy} \geq k_i \times 1/n. \qquad (7)$$

Ersetzt man nun noch gemäß Gleichung (4) $k_i$ durch $n \times k_a$ so ergibt sich also für das Auftreten von Totalreflexion

$$k_{ixy} \geq k_a. \qquad (8)$$

Die Projektion des Wellenvektors $\mathbf{k}_i$ im Inneren des Wellenleiters 3 auf die xy-Ebene muss betragsmäßig also mindestens dem Betrag $k_a$ des Wellenvektors $\mathbf{k}_a$ außerhalb des Lichtleiters 3 entsprechen. Andererseits kann der Betrag $k_{ixy}$ der Projektion des Wellenvektors im Inneren des Lichtleiters 3 auf die xy-Ebene maximal dem Gesamtbetrag $k_i$ des Wellenvektors $\mathbf{k}_i$ im Inneren des Lichtleiters 3 entsprechen (in diesem Fall ist Wellenvektorkomponente $k_z = 0$, so dass der Wellenvektor parallel zur Grenzfläche, also parallel zur Innenfläche 13 bzw. zur Außenfläche 15 verläuft). Totalreflexion tritt also immer dann auf, wenn der Betrag $k_{ixy}$ der Projektion des Wellenvektors $\mathbf{k}_i$ im Inneren des Lichtleiters auf die xy-Ebene zwischen dem Betrag $k_a$ des Wellenvektors $\mathbf{k}_a$ außerhalb des Lichtleiters und dem Betrag $k_i$ des Wellenvektors $\mathbf{k}_i$ innerhalb des Lichtleiters liegt. Dies ist in Figur 4 veranschaulicht.

Die Figur 4 zeigt in der xy-Ebene des k-Raums zwei um den Ursprung des Koordinatensystems, d.h. um die z-Achse zentrierte Kreise welche tatsächlich Kugelschnitte von Kugeln im dreidimensionalen Koordinatensystem sind), deren Radius im Falle des mit der Bezugsziffer 35 gekennzeichneten Kreises den Betrag $k_a$ des Wellenvektors $\mathbf{k}_a$ außerhalb des Lichtleiters sowie im Falle des mit der Bezugsziffer 37 bezeichneten Kreises den Betrag $k_i$ des Wellenvektors $\mathbf{k}_i$ im Inneren des Lichtleiters 3 repräsentieren. Alle vom Ursprung des Koordinatensystems ausgehenden Wellenvektoren $\mathbf{k}_i$, deren Projektion $\mathbf{k}_{xy}$ auf die xy-Ebene des k-Raums zwischen den beiden Kreisen 35 und 37 liegt, können vom Lichtleiter 3 übertragen werden. Um die Darrstellung in Figur 4 von der Wellenlänge unabhängig zu machen, sind alle Wellenvektoren $\mathbf{k}_a$ außerhalb des Lichtleiters 3 durch Multiplikation mit dem Faktor $\lambda/2\pi$ auf eine Einheitslänge von 1 normiert. Die Länge eines Wellenvektors im Inneren des Lichtleiters 3 ist damit durch den Brechungsindex n im Wellenleiter gegeben (vgl. Gleichung (4)). Somit haben in der in Figur 4 gezeigten Darstellung der innere Kreis den Radius 1 und der äußere Kreis den Radius n.

Wenn nun ein Bildfeld mit einem bestimmten horizontalen Bildfeldwinkel und einem bestimmten vertikalen Bildfeldwinkel in den Lichtleiter 3 eingekoppelt wird, so weisen die Wellenvektoren $k_a$ der die Eintrittspupille des HMDs 1 passierenden Strahlen außerhalb des Lichtleiters 3 hauptsächlich eine Wellenvektorkomponente $k_z$ und nur kleine Wellenvektorkomponenten $k_x$ und $k_y$ auf. Die Menge der auftretenden Wellenvektorkomponenten $k_x$ und $k_y$ kann dabei als das Winkelspektrum der die Eintrittspupille des HMDs 1 passierenden Strahlen (welche das auf dem Display 17 dargestellte Bild repräsentieren) angesehen werden. Dieses Winkelspektrum ist in Figur 4 unter der Bezugsziffer 39 eingezeichnet. Durch die Einkoppelstruktur 5 aus Figur 1 wird das Winkelspektrum 39 entlang der x-Richtung in den Bereich d.h. die Wellenvektorkomponente $k_z$ wird beim Wellenvektor $k_i$ im Inneren des Lichtleiters 3 zugunsten der Wellenvektorkomponente $k_x$ reduziert, so dass beim Wellenvektor $k_i$ im Inneren des Lichtleiters 3 $k_x$ die wesentliche Wellenvektorkomponente darstellt. Das daraus resultierende Winkelspektrum im Inneren des Lichtleiters 3 ist in Figur 4 unter der Bezugsziffer 41 eingezeichnet. Im Falle einer diffraktiven Einkopplung wie bei der Einkoppelsturktur 5 aus Figur 1 ergibt sich der Wellenvektor $k_i$ im Inneren des Lichtleiters aus dem Wellenvektor $k_a$ außerhalb des Lichtleiters gemäß der Laue-Bedingung

$$k_a - k_i = G$$

aus dem Gittervektor **G** der Einkoppelstruktur 5. Das Winkelspektrum wird also durch die Einkoppelstruktur um den Gittervektor **G** verschoben. Nach dem Transportieren der Wellenvektoren $k_i$ durch den Lichtleiter 3, werden diese durch die Auskoppelstruktur 7 wieder aus dem Lichtleiter 3 ausgekoppelt, wobei die in Figur 1 dargestellte Auskoppelstruktur 7 einen Gittervektor **G'** aufweist. Die Gittervektorkomponenten $G'_x$ und $G'_y$ entsprechen dabei dem negativen der Gittervektorkomponenten $G_x$ und $G_y$ des Gittervektors **G** der Einkoppelstruktur 5 wohingegen die Gittervektorkomponente $G'_z$ des Gittervektors **G'** der Auskoppelstruktur 7, der Gittervektorkomponente $G_z$ des Gittervektor **G** der Einkoppelsturktur 5 entspricht. Auf diese Weise wird das Winkelspektrum 41 wieder an seinen ursprünglichen Ort zurückverschoben, und die wesentliche Wellenvektorkomponente der ausgekoppelten Wellenvektoren ist wieder die Wellenvektorkomponente $k_z$, jedoch im Vergleich zur Wellenvektorkomponente $k_z$ vor der Einkopplung in den Lichtleiter 3, die im vorliegenden Ausführungsbeispiel durch die dem Auge zugewandte Seite des Lichtleiters erfolgt, um 180° gedreht. Erfolgt die Einkopplung durch die dem Auge abgewandte Seite, entspricht die Wellenvektorkomponente $k_z$ auch in ihrer Orientierung der Wellenvektorkoponente $k_z$ vor der Einkopplung. Das ausgekoppelte Winkelspektrum entspricht im Wesentlichen wieder dem unter der Bezugsziffer 39 eingezeichneten Winkelspektrum. Der Bereich des unter der Bezugsziffer 39 eingezeichneten Winkelspektrums, der oberhalb der $k_x$-Achse liegt, enthält Wellenvektoren von Lichtstrahlen, die vom Nutzer des HMDs 1 als von untern kommend wahrgenommen werden, der Bereich, der unterhalb der $k_x$-Achse liegt, enthält Wellenvektoren von Lichtstrahlen, die vom Nutzer des HMDs 1 als von oben kommend wahrgenommen werden.

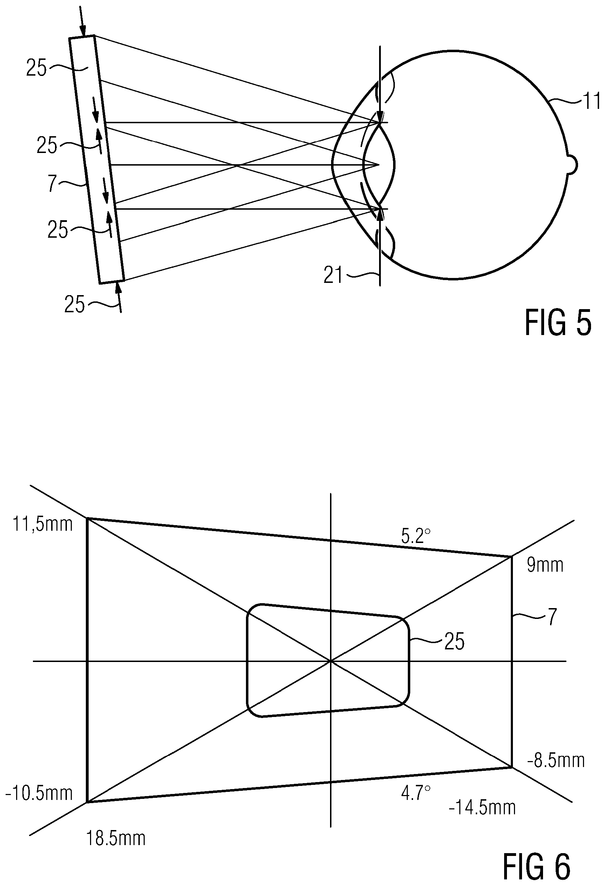

Um das vom Lichtleiter 3 übertragbare Winkelspektrum für den Nutzer des HMDs 1 sichtbar zu machen, muss die Auskoppelstruktur eine bestimmte Fläche im Lichtleiter 3 einnehmen. Die im Lichtleiter 3 einzunehmende Fläche ergibt sich dabei aus der Projektion der Austrittspupille des HMDs 1 auf die Ebene der Auskoppelstruktur 7 in dem Lichtleiter 3 für all diejenigen Winkel, unter denen der Nutzer des HMDs im Rahmen des übertragenen Winkelspektrums das übertragene Bild betrachten kann. Der Rand des benötigten Auskoppelbereichs ergibt sich dabei aus der Projektion der Austrittspupille auf den Lichtleiter entlang der maximalen Winkel. Die Figuren 5 und 6 zeigen die so ermittelte Ausdehnung der Auskoppelstruktur im Lichtleiter 3, wobei die Projektion der Austrittspupille auf die Fläche der Auskoppelstruktur 7 mit der Bezugsziffer 25 bezeichnet ist. In Figur 6 ist dabei lediglich die Projektion der Austrittspupille 25 für einen vertikalen und horizontalen Winkel von jeweils 0° eingezeichnet, in Figur 5 auch die Projektion der Austrittspupille für den maximal positiven und den maximal negativen Winkel, unter dem das vom HMD 1 übertragen Bild noch erfasst werden kann. Ein horizontaler und vertikaler Winkel von jeweils 0° repräsentieren dabei Strahlen, die bei geradeaus schauendem Auge 11 parallel zur Sehachse des Auges 11 ins Auge gelangen. Die Figur 6 stellt eine Draufsicht auf die zum Auskoppeln benötigte Fläche im Falle des rechten Auges aus derjenigen Richtung, aus der das Auge auf den Lichtleiter schaut, dar.

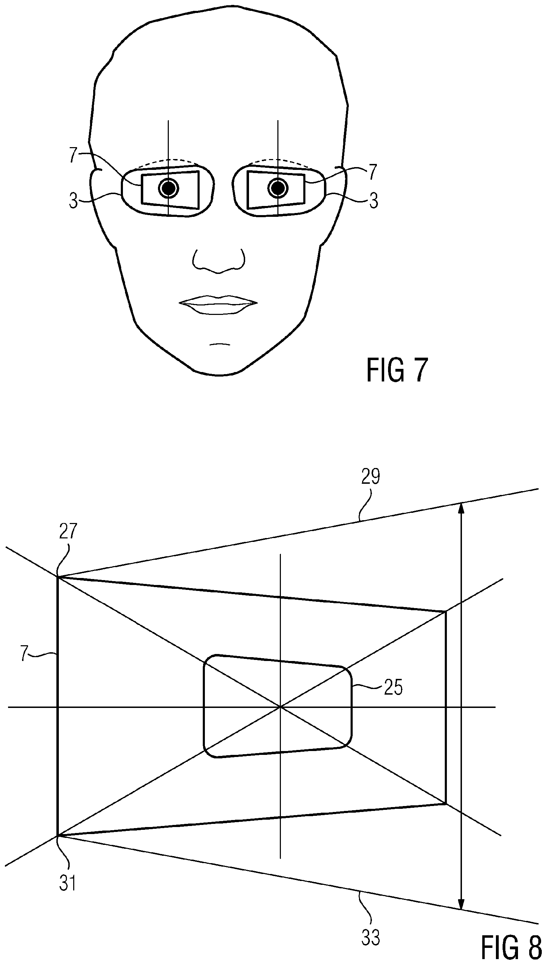

Der Feldwinkel, welcher der in Figur 6 dargestellten Fläche entspricht, beträgt 60° mal 34° mit einem Hornhaut-Scheitelabstand von 15 mm, einem Fassungsscheibenwinkel von 12° und einem pantoskopischen Winkel von 8° in einem nahezu flachen Lichtleiter 3, bspw. einem Brillenglas mit einem Krümmungsradius größer 150 mm. Im Falle stärker gekrümmter Brillengläser ergeben sich geringfügige Abweichungen von der in Figur 6 dargestellten Fläche. Um sich ein besseres Bild von der Größe der so ermittelten Auskoppelstruktur 7 im Lichtleiter 3 machen zu können, ist in Figur 7 die Ausdehnung der Auskoppelstrukturen, wie sie gemäß der mit Bezug auf die Figuren 5 und 6 erfolgten Beschreibung ermittelt worden ist, dargestellt. Es ist zu erkennen, dass die Auskoppelstrukturen 7 einen erheblichen Bereich des Brillenglases, d.h. des Lichtleiters 3 einnehmen. Hierbei besteht die Schwierigkeit, dass das Licht im Brillenglas, also im Lichtleiter 3, von der Seite zum Auskoppelbereich geführt werden soll. Für negative Winkel, beispielsweise einem negativen Winkel von 17°, das heißt das Licht kommt für den Betrachter von oben, muss Licht aus dem oberen Abschnitt der Auskoppelstruktur 7 ausgekoppelt werden.

Im Folgenden sollen statt der Winkel die Verhältnisse von Wellenvektorkomponenten zueinander betrachtet werden. In dem zuvor beschriebenen Koordinatensystem sind Wellenvektoren mit negativen Feldwinkeln solche Wellenvektoren, die ein Verhältnis von $k_y/k_{xz} < 0$ aufweisen. Dabei bezeichnet $k_y$ die y-Komponente des Wellenvektors **k** und kxz den Absolutbetrag der Projektion des Wellenvektors auf die xz-Ebene.

Dieser Absolutbetrag der Projektion auf die xz-Ebene ist durch $k_{xz} = \sqrt{k_x^2 + k_z^2}$ gegeben, wobei $k_x$ und $k_z$ die x- und z-Komponenten des Wellenvektors k repräsentieren. Verhältnisse $k_y/k_{xz} > 0$ repräsentieren positive Winkel, was im vorliegenden Fall Winkel sind, welche vom Betrachter als von unten kommend wahrgenommen werden.

In den Auskoppelstrukturen nach Stand der Technik müssen Wellenvektoren mit einem negativen Verhältnis von $k_y$ zu $k_{xz}$ auch im Lichtleiter ein negatives Verhältnis von $k_y$ zu $k_{xz}$ aufweisen, lediglich um die Brechzahldifferenz gemäß dem Snelliusschen Brechungsgesetz verringert. In Polycarbonat erhält man so bei einem Winkel außerhalb des Lichtleiters von von -17°, was einem Verhältnis von $k_y$ zu $k_{xz}$ von ca. -0,31 entspricht, im Lichtleiter bspw. einen Winkel von -10,6°, was einem Verhältnis von $k_y$ zu $k_{xz}$ von ca. -0,19 entspricht (das Verhältnis $k_y$ zu $k_{xz}$ entspricht dem Tangens des Winkels des Wellenvektors **k** zur xz-Ebene, die bei geradeaus schauendem Auge im Wesentlichen der horizontalen Ebene entspricht). Aufgrund der Nichtlinearität des Brechungsgesetzes hängt das tatsächliche Verhältnis von $k_y$ zu $k_{xz}$ im inneren des Lichtleiters vom Wert der x-Komponente $k_x$ des Wellenvektors ab. Ein Verhältnis von Verhältnis von $k_y$ zu $k_{xz}$ von ca. -0,31 außerhalb des Lichtleiters kann daher im Inneren des Lichtleiters in Abhängigkeit vom Wert der x-Komponente $k_x$ des Wellenvektors einem Verhältnis von $k_y$ zu $k_{xz}$ größer oder kleiner als -0,19 entsprechen.

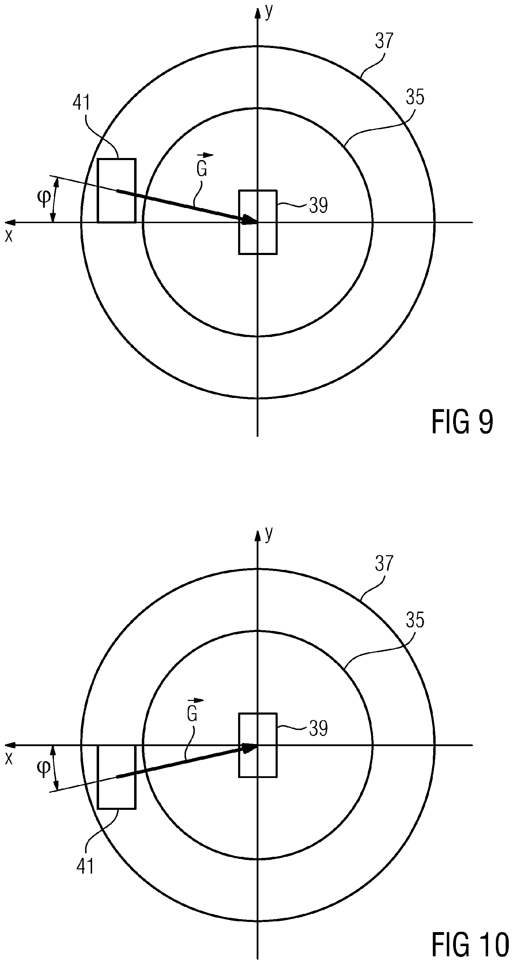

Da der Wellenvektor von Licht mit einem negativen Winkel von -17° im Inneren eines Lichtleiters 3 aus Polycarbonat in einem Winkel von -10,6° verlaufen muss, muss bei einer Einkopplung von der Seite ein als Brillenglas ausgebildeter Lichtleiter zur Schläfe hin breiter werden, damit das Licht "von oben" auf die Auskoppelstruktur 7 treffen kann. Dies ist schematisch in Figur 8 verdeutlicht. Lichtstrahlen, die von der in Figur 8 links oben dargestellten Ecke 27 der Auskoppelstruktur 7 ausgekoppelt werden, weisen im Lichtleiter 3 einen Verlauf auf, der durch die Linie 29 dargestellt ist. Entsprechend verlaufen Lichtstrahlen, welche einen Winkel von +17° repräsentieren im Lichtleiter 3 unter einem Winkel von +10,6°. Der Verlauf eines Strahls, welcher von der linken unteren Ecke der Auskoppelstruktur unter einem vertikalen Winkel von +17° ausgekoppelt wird, ist in Figur 10 durch die Linie 33 gekennzeichnet. Wie Figur 8 verdeutlicht, laufen die Lichtstrahlen im Lichtleiter mit zunehmender Entfernung von der Auskoppelstruktur vertikal auseinander. Dies hat zur Folge, dass die Ausdehnung des Lichtleiters 3 in y-Richtung, also die vertikale Ausdehnung der Brillengläser in Figur 7, mit zunehmendem Abstand von der Auskoppelstruktur immer größer werden müssten, was bei einem Brillenglas nur schwer zu realisieren ist, ohne den ästhetischen Gesamteindruck des Brillenglases zu stören. Für den durch die Linien 29 und 33 dargestellten Verlauf der Strahlen mit maximalen negativen und maximalen positiven vertikalen Winkel, also Strahlen mit maximal negativen Verhältnis von $k_y$ zu $k_{xz}$ und maximal positiven Verhältnis von $k_y$ zu $k_{xz}$, ist in den Brillengläsern 3 aus Figur 7 kein Platz. Während die Brillengläser 3 im Bereich der unteren Kante vergrößert werden könnten, ohne den ästhetischen Gesamteindruck allzu sehr zu beeinträchtigen, ist eine Ausdehnung der oberen Kante in der Regel mit einer erheblichen Beeinträchtigung des ästhetischen Eindrucks der Brillengläser 3 verbunden. Die vorliegende Erfindung ermöglicht dagegen das Leiten der mit maximalen negativen Winkel und dem maximalen positiven vertikalen Winkel verbundenen Strahlen im Lichtleiter, ohne die Ausdehnung des Lichtleiters in y-Richtung (vgl. Figur 1), also die vertikale Ausdehnung der Brillengläser in Figur 7, so weit zu vergrößern, dass ein unästhetischer Gesamteindruck entsteht.

Die Erfindung ist im vorliegenden Ausführungsbeispiel dadurch realisiert, dass der Gittervektor G einer diffraktiven Auskoppelstruktur 7 einen Winkel φ zur x-Achse des k-Raums einschließt. Durch diesen Winkel φ, der im vorliegenden Ausführungsbeispiel einen Wert von 11° aufweist, wird das Winkelspektrum 41 im Inneren des Lichtleiters 3 zu positiven Werten von $k_y$ hin verschoben. Im vorliegenden Ausführungsbeispiel erfolgt die Verschiebung soweit, dass im Inneren des Lichtleiters 3 nur noch positive Werte von $k_y$ auftreten. Dadurch ist das Verhältnis von $k_y$ zum Betrag $k_{xz}$ der Projektion des Wellenvektors auf die xz-Ebene im Inneren des Lichtleiters 3 immer positiv. Da dieses Verhältnis dem Tangens des Winkels des Wellenvektors zur xz-Ebene entspricht, heißt dies, dass im Inneren des Lichtleiters 3 nur positive Winkel zur xz-Ebene auftreten und damit, dass kein Lichtstrahl von Oben zur Auskoppelstruktur gelangt, was einem negativen Winkel und einem negativen Wert von $k_y$ entsprechen würde. Die Oberkante des Brillenglases braucht daher nicht oberhalb der Oberkante der Auskoppelstruktur 7 zu verlaufen. Es sei an dieser Stelle angemerkt, dass es nicht notwendiger Weise der Fall sein muss, das gar keine negativen Werte für $k_y$ auftreten, sondern lediglich, dass die negativen Werte für $k_y$ soweit reduziert werden, dass ein unästhetisches Anheben der Oberkante des Brillenglases nicht notwendig ist, um das gesamte Winkelspektrum 39 übertragen zu können.

Die in Figur 9 dargestellte Verschiebung des Winkelspektrums 41 im Inneren des Lichtleiters 3 kann jedoch zu einer Vergrößerung eines Brillenglases dergestalt, dass die Unterkante in Figur 7 weiter nach unten wandern muss, führen. Wie bereits erwähnt, bringt dies weniger ästhetische Probleme mit sich, als die Oberkante des Brillenglases weiter nach oben zu versetzen. Generell kann das Winkelspektrum 41 jedoch auch statt zu positiven Werten von $k_y$ zu negativen Werten von $k_y$ hin verschoben werden, bspw. wenn die Unterkante des Brillenglases eine Kante darstellt, die nicht versetzt werden kann, und ein Vergrößern des Brillenglases im Bereich der Oberkante unproblematisch ist. In diesem Fall wird die Menge an Wellenvektoren, die von unten auf die Auskoppelstruktur 7 treffen, verringert, und ggf. treffen gar keine Wellenvektoren mehr von unten auf die Auskoppelstruktur 7 auf. Diese Variante ist in Figur 10 dargestellt. In der in Figur 10 dargestellten Variante ist der Gittervektor G um einen Winkel $\varphi$, dessen Wert im vorliegenden Beispiel -11° beträgt, zur x-Achse des k-Raums verdreht. Selbstverständlich sind auch andere negative Werte für den Winkel $\varphi$ möglich, je nachdem, wie weit das Winkelspektrum 41 im Inneren des Lichtleiters 3 zu negativen Werten von $k_y$ verschoben werden soll.

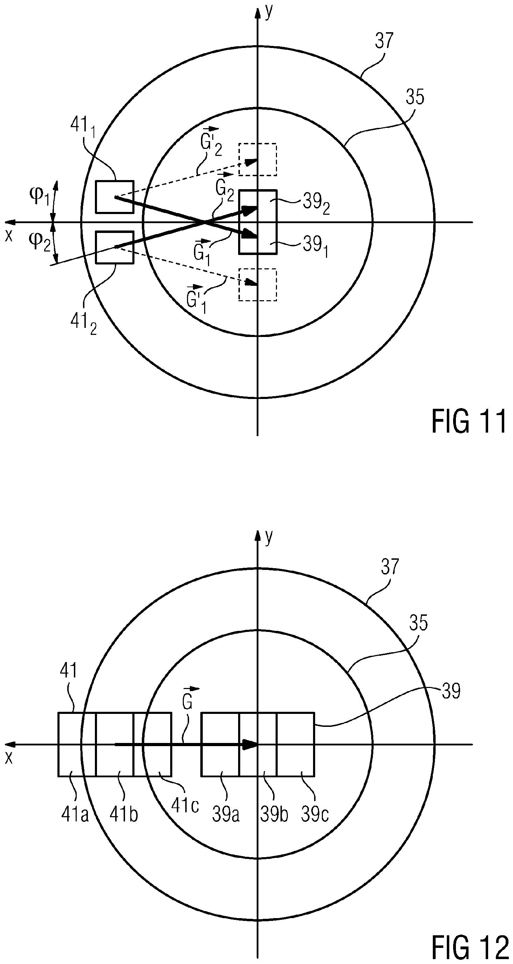

Im Rahmen der Erfindung besteht auch die Möglichkeit, die Auskoppelstruktur 7 horizontal zweizuteilen, beispielsweise so, dass der obere Abschnitt der Auskoppelstruktur 7 nur Wellenvektoren auskoppelt, die nach dem Auskoppeln negative Werte von $k_y$ oder $k_y = 0$ aufweisen und der untere Abschnitt nur Wellenvektoren, die nach dem Auskoppeln positive Werte von $k_y$ aufweisen. Die vom oberen Abschnitt der Auskoppelstruktur ausgekoppelten Strahlen bilden dann denjenigen Teil des Winkelspektrums 39, der in Figur 4, unterhalb der x-Achse liegt, und die vom unteren Abschnitt der Auskoppelstruktur ausgekoppelten Wellenvektoren denjenigen Teil des Winkelspektrums 39, der in Figur 4 oberhalb der x-Achse liegt. Der Gittervektor $\mathbf{G}_1$ des oberen Abschnitts der Auskoppelstruktur 7 kann wie in Figur 11 dargestellt so gewählt sein, dass derjenige Teil des Winkelspektrums $39_1$, der im k-Raum unterhalb der x-Achse liegt, im Inneren des Lichtleiters 3 im k-Raum vollständig oberhalb der x-Achse liegt (Bezugsziffer $41_1$), und der Gittervektor $\mathbf{G}_2$ des unteren Abschnitts der Auskoppelstruktur 7 kann so gewählt sein, dass derjenige Teil des Winkelspektrums $39_2$, der im k-Raum oberhalb der x-Achse liegt, im Inneren des Lichtleiters 3 im k-Raum vollständig unterhalb der x-Achse liegt (Bezugsziffer $41_2$). Dies bedeutet, dass dem oberen Abschnitt der Auskoppelstruktur 7 im inneren des Lichtleiters die Wellenvektoren von unten zugeführt werden und dem unteren Abschnitt der Auskoppelstruktur 7 von oben. Mit anderen Worten, die dem unteren Abschnitt und dem oberen Abschnitt der Auskoppelstruktur 7 zugeführten Wellenvektoren laufen im inneren des Lichtleiters 3 über Kreuz. Dadurch kann die vertikale Ausdehnung des Lichtleiters 3 bzw. eines aus dem Lichtleiter gebildeten Brillenglases gering gehalten werden kann. In der Darstellung des Ausgangsbildes auf dem Display eines mit einem solchen Brillenglas ausgestatteten HMDs sind der obere und der untere Teil des Bildfeldes entsprechend zu vertauschen. Falls ein Teil eines von einem Wellenvektor repräsentierten Strahlenbündels auf den falschen Abschnitt der Auskoppelstruktur 7 trifft, wird dieser wie durch die gestrichelten Gittervektoren $\mathbf{G'}_1$ und $\mathbf{G'}_2$ und die gestrichelten Winkelspektren $41'_1$ und $41'_2$ in Figur 11 angedeutet derart ausgekoppelt, dass sie einen sehr großen bzw. einen sehr kleinen Wert von $k_y$ aufweisen. Durch geeignete Wahl der Gittervektoren kann dabei erreicht werden, dass die fehlgeleiteten Teile des Winkelspektrums soweit von der xz-Ebene entfernt sind, dass sie nicht in die Austrittspupille des HMDs gelangen und somit keine unerwünschten Doppelbilder entstehen.

Im Falle der vertikal zweigesteilten Auskoppelstruktur 7 liegt auch eine vertikal zweigeteilte Einkoppelstruktur 5 vor, wobei die Abschnitte der Einkoppelstruktur 5 den Abschnitten der Auskoppelstruktur 7 jeweils derart zugeordnet sind, dass die von den jeweiligen Einkoppelstrukturen 5 eingekoppelten Strahlen jeweils im Wesentlichen nur von einer der Auskoppelstrukturen 7 ausgekoppelt werden. Die Problematik eines etwaigen Überlapps von eingekoppelten Strahlenbündeln mit dem falschen Teil der Auskoppelstruktur 7 kann dabei wie mit Bezug auf Figur 11 beschrieben gelöst werden.

In den bisher beschriebenen Ausführungsvarianten sind die horizontalen Feldwinkel des übertragenen Winkelspektrums klein genug, dass das Winkelspektrum 41 mit all seinen Werten für die x-Komponente $k_x$ des Wellenvektors $\mathbf{k}$ im Inneren des Lichtleiters 3 zwischen den beiden mit den Bezugsziffern 35 und 37 bezeichneten Kreisen liegt, d.h., dass das Winkelspektrum 39 mit all seinen Komponenten $k_x$ übertragen werden kann. Insbesondere im Falle großer horizontaler Feldwinkel, wie sie beispielsweise bei Bildern im 16:9 Format auftreten, ist der Bereich, in denen Werte für $k_x$ auftreten können, jedoch breiter als der Bereich zwischen den Kreisen 35 und 37. Diese Situation ist in Figur 12 dargestellt. Das aus dem Feldwinkel resultierende Winkelspektrum ist in Figur 12 dreigeteilt dargestellt (Teile 39a, 39b und 39c), wobei der Teil 39b einem Winkelspektrum, wie es in Figur 4 dargestellt ist, entspricht. Diejenigen Teil (39a, 39c) des Winkelspektrums 39, die in Figur 12 links und rechts vom zentralen Teil 39b des Winkelspektrums 39 dargestellt sind, können nicht mehr vollständig mittels Totalreflektion des Lichtleiters 3 übertragen werden, da sie sich nach der Einkopplung nicht vollständig innerhalb der beiden Kreise 35 und 37 befinden.

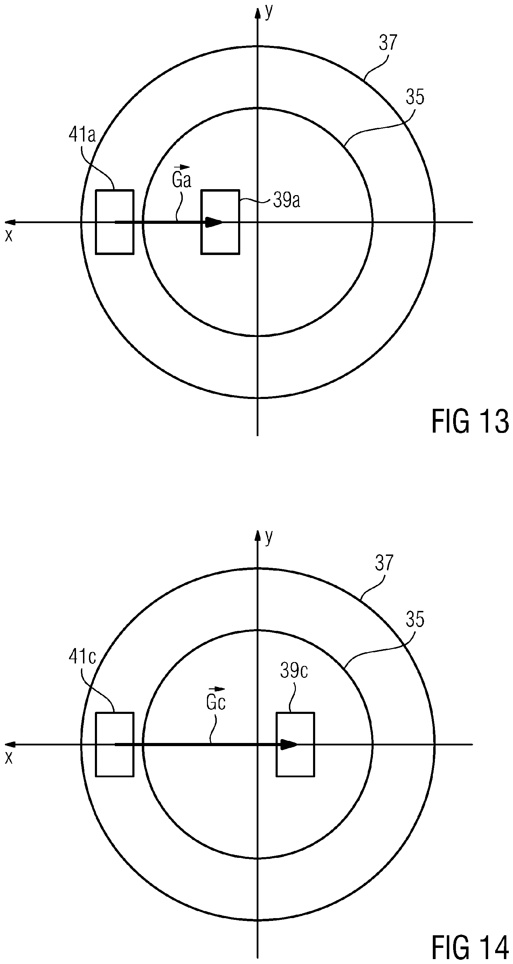

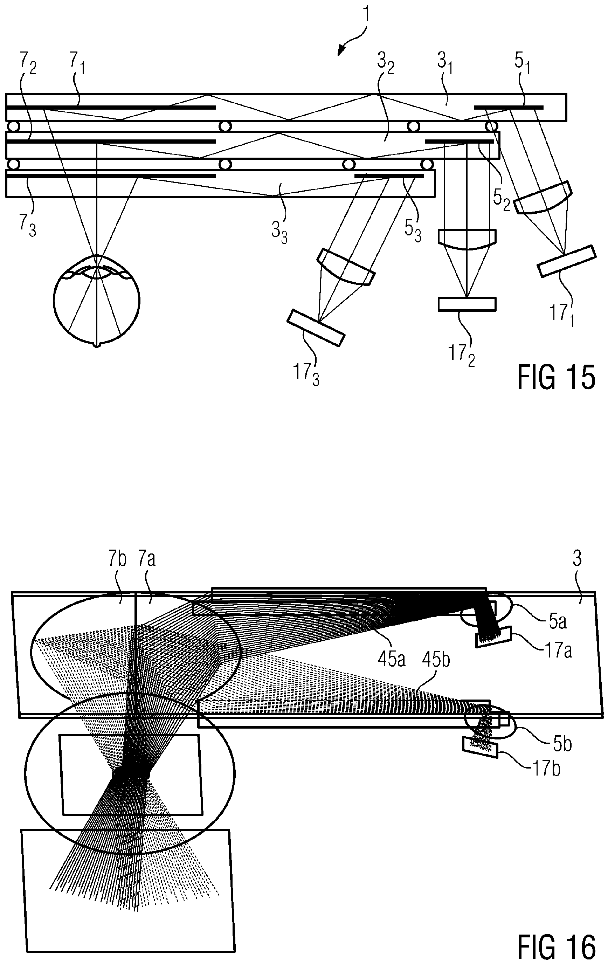

Um dennoch Bilder mit einem großen Feldwinkel, insbesondere Bilder mit einem großem horizontalen Feldwinkel, übertragen zu können, ist beispielsweise in WO 2017/102795 A1 vorgeschlagen, ein HMD mit mehreren Bildgebern $17_1$, $17_2$, $17_3$ oder mehreren Bildgeberabschnitten eines einzigen Bildgebers auszustatten und für jedes auf einem der Bildgeber $17_1$, $17_2$, $17_3$ bzw. Bildgeberabschnitte dargestellte Teilbildfeld im Lichtleiter 3 jeweils einen eigenen Unterlichtleiter $3_1$, $3_2$, $3_3$ zu verwenden (siehe Figur 15), wobei jeder Unterlichtleiter $3_1$, $3_2$, $3_3$ eine eigene Einkoppelstruktur $5_1$, $5_2$, $5_3$ und eine eigene Auskoppelstruktur $7_1$, $7_2$, $7_3$ aufweist. Die einzelnen Einkoppelstrukturen $5_1$, $5_2$, $5_3$ und die einzelnen Auskoppelstrukturen $7_1$, $7_2$, $7_3$ sind jeweils für gleiche Feldwinkel ausgebildet, jedoch für Lichtstrahlen aus unterschiedlichen Einfallsrichtungen optimiert. Beispielsweise im Falle eines Bildformates mit einem horizontalen Feldwinkel von 60° kann jeder Bildgeber $17_1$, $17_2$, $17_3$ bzw. Bildgeberabschnitt so ausgestaltet sein, dass er ein Teilbild mit einem Feldwinkel von 20° zeigt, und die Unterlichtleiter $3_1$, $3_2$, $3_3$ können so ausgebildet sein, dass sie jeweils einen horizontalen Feldwinkel von 20° übertragen, wobei die Feldwinkel jedoch jeweils um einen anderen zentrale Winkel zentriert sind. Dies wird im Falle einer diffraktiven Ein- und Auskopplung durch geeignete Wahl des jeweiligen Gittervektors erreicht, wie dies in den Figuren 13 und 14 dargestellt ist. Die Gittervektoren $G_a$ der Einkoppelstruktur $5_1$ und der Auskoppelstruktur $7_1$ sind im vorliegenden Beispiel so ausgebildet, dass der von ihnen ein- bzw. ausgekoppelte horizontale Feldwinkel um einen horizontalen Winkel von -20° zentriert ist (entspricht dem in Figur 14 dargestellten Fall). Die Gittervektoren der Einkoppelstruktur $5_2$ und der Auskoppelstruktur 72 sind dann so ausgestaltet, dass der von ihnen ein- bzw. ausgekoppelte horizontale Feldwinkel um einen horizontalen Winkel von 0° zentriert ist (entspricht dem in Figur 4 dargestellten Fall). Schließlich sind die Gittervektoren $G_c$ der Einkoppelstruktur $5_3$ und der Auskoppelstruktur $7_3$ so ausgestaltet, dass der von ihnen ein- bzw. ausgekoppelte horizontale Feldwinkel um einen horizontalen Winkel von +20° zentriert ist (entspricht dem in Figur 13 dargestellten Fall). Insgesamt wird durch die drei Unterlichtleiter $3_1$, $3_2$ und $3_3$ somit ein Feldwinkel von 60° im Bereich von -30° bis +30° übertragen, wobei der ursprüngliche Feldwinkel von 60° in drei Feldwinkel von je 20° (-30° bis -10°, -10° bis +10° und +10° bis +30°) aufgeteilt wurde, die jeweils getrennt voneinander durch die unterschiedlichen Lichtleiter $1_1$, $1_2$ und $1_3$ übertragen werden. In ähnlicher Weise ist grundsätzlich auch die Aufteilung eines vertikalen Feldwinkel in mehrere Teilbereiche möglich, die getrennt voneinander übertragen werden. Die beschriebene Vorgehensweise ist auch unter dem Begriff "Field Stitching" bekannt.

Der Feldwinkel von 60° und die Aufteilung in Feldwinkel von jeweils 20° sind hier lediglich zur besseren Veranschaulichung des Konzepts des "Field Stitching" herangezogen worden. Andere Feldwinkel als der Feldwinkel von 60° und eine andere Aufteilung des Feldwinkels als in Feldwinkel von jeweils 20° sind selbstverständlich möglich, auch solche Aufteilungen, in denen der Feldwinkel ungleichmäßig aufgeteilt wird (bspw. Aufteilung eines Feldwinkels von 50° in Feldwinkel von -30° bis -20°, -20° bis +10°, +10° bis +20°, also in Feldwinkel 10°, 30° und wieder 10°)

Während in Figur 15 wie in Figur 1 mit Hilfe von Beugungsgittern ein- und ausgekoppelt wird, ist e auch möglich, mittels unterschiedlich schräg gestellter teildurchlässiger Spiegel ein- und auszukoppeln. Insbesondere können die teildurchlässigen Spiegel dann so ausgestaltet sein, dass sie für bestimmte Auftreffwinkel teilreflektierend, für alle andere Auftreffwinkel dagegen vollständig transparent sind.

Mit Hilfe des beschriebenen Field Stitchings ist bei diffraktiver Auskopplung und dreifachem Field Stitching, wie es mit Bezug auf Figur 15 beschrieben worden ist, ein Bildfeld von 60° x 34° (entspricht einem Bildformat von 16:9) entsprechend einem diagonalen Bildfeld von bis zu 70° erzielbar. Bei einer Ausführung mit Teilerspiegeln sind ohne Field Stitching etwa 47° x 26,5° erreichbar, was einer Diagonalen von 54° entspricht. Ein größeres Bildfeld mit einer Diagonale von etwa 70° erfordert ein zweifaches Field Stitching.

Mit Bezug auf die Figuren 12 bis 15 wurde davon ausgegangen, dass für jeden Teil des Winkelspektrums 39a, 39b, 39c ein eigener Lichtleiter $3_1$, $3_2$, $3_3$ genutzt wird. Darüber hinaus beinhaltet die vorliegende Erfindung jedoch Ausführungsvarianten, bei denen wenigstens zwei Teile des Winkelspektrums 39a, 39b, 39c durch einen einzigen Lichtleiter 3 gemeinsam übertragen werden. Diese Ausführungsvarianten zeichnen sich durch eine geringere Zahl aufeinander gestapelter Lichtleiter aus und ermöglichen besonders dünne und ästhetische Brillengläser für HMDs in Form von Datenbrillen. Dieser Ansatz ist mit der zusätzlichen Randbedingung verknüpft, dass der Nutzer einer Datenbrille keine Geisterbilder wahrnimmt, die durch ein Übersprechen zwischen den in einem Lichtleiter gemeinsam übertragenen Teilen des Winkelspektrums 39a, 39b, 39c entstehen. Im Folgenden soll davon ausgegangen werden, dass Geisterbilder entstehen, wenn die Strahlenbündel bzw. die Bildinformation eines Teils des Winkelspektrums 39a, 39b, 39c auf ein für einen anderen Teil des Winkelspektrums 39a, 39b, 39c vorgesehenes Auskoppelelement. Geisterbilder stören den Nutzer, wenn die mit den Geisterbildern verknüpften Strahlen die Austrittspupille bzw. die Eyebox erreichen und somit bei zulässigen Pupillenpositionen auf die Netzhaut fokussiert werden. Dieser Effekt lässt sich auf unterschiedliche Arten vermeiden.

Erstens können die einzelnen Teile des Winkelspektrums 39a, 39b, 39c räumlich so geleitet werden, dass die Lichtstrahlen eines Teils des Winkelspektrums 39a, 39b, 39c nicht auf die einem anderen Teil des Winkelspektrums 39a, 39b, 39c zugeordnete Auskoppelstruktur treffen.

Zweitens besteht die Möglichkeit, die Auskoppelstrukturen (Gitter, Wellenlängenselektive Volumenhologramme oder die dichroitische Spiegel) so auszulegen, dass sie für Strahlen eines falschen Teils des Winkelspektrums 39a, 39b, 39c insensitiv sind. In diesem Fall breiten sich die Strahlen des falschen Teils des Winkelspektrums 39a, 39b, 39c weiter im Lichtleiter aus und werden nicht ausgekoppelt. Eine spezielle Form dieses Ansatzes sind Kombinationen aus einem Winkelspektrum innerhalb des Wellenleiters und Gittervektoren, die das Winkelspektrum in denjenigen Bereich in der Ebene xy-Ebene des k-Raums verschieben, in der eine Ausbreitung im Wellenleiter nicht stattfinden würde, beispielsweise in einem Bereich außerhalb des äußeren Kreises 37.

Drittens kann die optische Anordnung so ausgelegt werden, dass die Strahlen eines Teils des Winkelspektrums 39a, 39b, 39c, welcher von einer Auskoppelstruktur fälschlicherweise ausgekoppelt wird, derart abgelenkt wird, dass sie die Austrittspupille bzw. die Eye-Box verfehlen. Eine derartige Vorgehensweise wurde mit Bezug auf Figur 11 für die Aufteilung des Winkelspektrums in einen Teil oberhalb der x-Achse und einen Teil unterhalb der x-Achse beschrieben.

Ein Beispiel für ein zweifaches Field Stitching, bei dem das gesamte Winkelspektrum über einen einzigen Lichtleiter 3 übertragen wird, ist in Figur 16 dargestellt. Die den Strahlen 45a des einen Teils des Winkelspektrums zugeordneten Ein- und Auskoppelgitter 5a, 7a besitzen jeweils die gleiche Orientierung, die gleiche Gitterperiode und verwenden jeweils die entgegengesetzte Beugungsordnung (beispielsweise erste Ordnung zur Einkopplung und - erste Ordnung zur Auskopplung). Ebenso besitzen die den Strahlen 45b des anderen Teils des Winkelspektrums zugeordneten Ein- und Auskoppelgitter 5b, 7b jeweils die gleiche Orientierung, die gleiche Gitterperiode und verwenden jeweils die entgegengesetzte Beugungsordnung (beispielsweise erste Ordnung zur Einkopplung und - erste Ordnung zur Auskopplung). Die Hauptstrahlen der beiden von den Einkoppelgittern 5a, 5b eingekoppelten Strahlenbündel 45a, 45b sind jeweils um +10° bzw. -10° gegenüber der Normalen der Einkoppelfläche verdreht und weisen unterschiedliche Gitterperioden auf, um die gegeneinander verkippten Strahlenbündel 45a, 45b jeweils optimal im Lichtleiter 3 zu führen. Jedes Strahlenbündel 45a, 45n geht dabei von einem eigenen Display 17a, 17b aus.

Um eine Pupillenexpansion auch in der vertikalen Richtung zu ermöglichen, ist es möglich, ein drittes optisches Element, beispielsweise ein drittes Gitter zwischen der Einkoppel- und der Auskoppelstruktur 5a, 5b, 7a, 7b vorzusehen, dessen Orientierung sich aus der Orientierung der Einkoppelstruktur und der Auskoppelstruktur ergibt. Auch bei Verwendung von Umlenkelementen 46a, 47b am Rand des Brillenglases sind unterschiedliche Orientierungen der Einkoppel- und Auskoppelstrukturen denkbar.

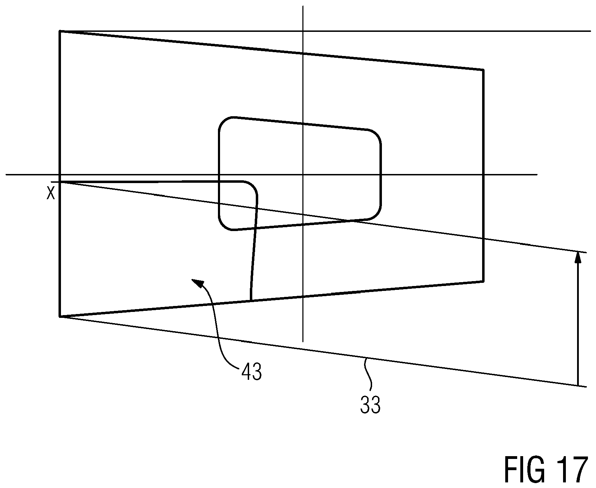

Neben den bereits beschriebenen Ausführungsvarianten der Erfindung sind weitere Ausführungsvarianten denkbar. Beispielsweise ist es denkbar, die Austrittspupille (streng genommen die Eye-Box) für bestimmte Winkel zu beschneiden. Wenn man beispielsweise nach links schaut, können für das rechte Auge diejenigen Winkel ausgeblendet werden, die Lichtstrahlen betreffen, welche von links unten wahrgenommen werden. Beim Schauen nach links werden solche Lichtstrahlen typischerweise von der Nase verdeckt, so dass es unproblematisch ist, auch das mit dem HMD erzeugte virtuelle Bild entsprechend zu beschneiden. Beim Nutzer des HMD entsteht dann der Eindruck, dass auch das virtuelle Bild durch die Nase verdeckt ist. Ein solcher Bereich 43, der weggelassen werden kann, ist in Figur 17 schematisch eingezeichnet. Durch die Weglassung dieses Bereiches 43 können insbesondere solche Teile des Winkelspektrums weggelassen werden, die sich beispielsweise in Figur 4 in der rechten Ecke des mit der Bezugsziffer 39 bezeichneten Winkelspektrums liegen. Die Linie 33 aus Figur 8 wandert dadurch nach oben, so dass eine geringere vertikale Ausdehnung des Brillenglases möglich wird.

Alle im Rahmen der Erfindung beschriebenen Prinzipien sind auch auf den Fall übertragbar, dass die Einkopplung nicht im Bereich der Schläfe erfolgt (also vornehmlich mit einer horizontalen Lichtleitung zum Auge), sondern im Bereich der Stirn (vornehmlich vertikale Lichtleitung zum Auge). Weiterhin beinhaltet die Erfindung nicht nur Ansätze, bei denen die Auskoppelstrukturen für die einzelnen Kanäle scharf aneinandergrenzen.

Die vorliegende Erfindung wurde zu Erläuterungszwecken anhand von Ausführungsbeispielen im Detail beschrieben. Einem Fachmann ist jedoch klar, dass im Rahmen der Erfindung Merkmale der beschriebenen Ausführungsbeispiele mit Merkmalen von anderen Ausführungsbeispielen kombiniert werden können, und dass im Rahmen der Erfindung von den Ausführungsbeispielen abgewichen werden kann.

Beispielsweise können sich die den einzelnen Teilen des Winkelspektrums zugeordneten Auskoppelstrukturen oder Auskoppelstrukturbereiche auch in einem Muster überlagern, z.B. in Form eines Schachtbrettmusters, in Form von Tortenstücken etc. Außerdem ist es möglich, gemultiplexte Volumenhologramme (Mehrfachbelichtung eines Hologramms mit unterschiedlichen Funktionen) zu verwenden oder mehrere dünne Volumenhologrammschichten zu überlagern, wobei jede Schicht einem anderen Kanal zugeordnet ist. Zudem können einzelne Lichtleiter und/oder einzelne Ein- und Auskoppelelemente statt zum Übertragen unterschiedlicher Teile des Winkelspektrums auch zum Übertragen unterschiedlicher Wellenlängen Verwendung finden. Insbesondere ist es möglich, sowohl einzelne Lichtleiter und/oder einzelne Ein- und Auskoppelelemente für unterschiedliche Teile des Winkelspektrums zu verwenden und für jeden Teil des Winkelspektrums wiederum einzelne Lichtleiter und/oder einzelne Ein- und Auskoppelelemente für unterschiedliche Wellenlängenbereiche. Die vorliegende Erfindung soll daher nicht durch die Ausführungsbeispiele beschränkt sein, sondern lediglich durch die beigefügten Ansprüche.

**Patentansprüche**

1. Lichtleiter (3) zum Leiten von Licht für ein am Kopf zu tragendes Display, HMD, (1), wobei der Lichtleiter (3) im HMD zum Platzieren vor einem Auge vorgesehen ist und umfasst:

   - wenigstens eine Einkoppelstruktur (5) zum Einkoppeln von Strahlen des durch den Lichtleiter (3) geleiteten Lichtes in den Lichtleiter (3), wobei die Strahlen jeweils durch Wellenvektoren **k** repräsentiert sind, die bei vor dem Auge platzierten Lichtleiter (3) in einem von der Sehachse (A) als z-Achse, einer von temporal nach nasal verlaufenden x-Achse und einer von caudal nach cranial verlaufenden y-Achse gebildeten Koordinatensystem jeweils eine Projektion in die xz-Ebene mit einem Betrag von $k_{xz}$ und eine y-Komponente $k_y$ aufweisen, sowie
   - wenigstens eine Auskoppelstruktur (7) zum Auskoppeln der durch den Lichtleiter (3) geleiteten Strahlen aus dem Lichtleiter (3),

   **dadurch gekennzeichnet, dass** die Auskoppelstruktur (7) derart orientiert ist, dass für alle von der Auskoppelstruktur (7) ausgekoppelten Strahlen, für die der Wellenvektor **k** nach der Auskopplung ein negatives Verhältnis $k_y/k_{xz}$ aufweist, der Wellenvektor **k** im Lichtleiter (3) ein Verhältnis von $k_y/k_{xz}$ größer -0,2 aufweist und/oder dass für alle von der Auskoppelstruktur (7) ausgekoppelten Strahlen, für die der Wellenvektor **k** nach der Auskopplung ein positives Verhältnis $k_y/k_{xz}$ aufweist, der Wellenvektor **k** im Lichtleiter ein Verhältnis von $k_y/k_{xz}$ kleiner +0,2 aufweist.

2. Lichtleiter (3) nach Anspruch 1, **dadurch gekennzeichnet, dass** der Lichtleiter (3) wenigstens zwei Einkoppelstrukturen ($5a$, $5b$, $5_1$, $5_2$, $5_3$) aufweist, die jeweils eine von zwei voneinander verschiedenen Teilmengen an Strahlen des durch den Lichtleiter (3) geleiteten Lichtes einkoppeln, und wenigstens zwei Auskoppelstrukturen ($7a$, $7b$, $7_1$, $7_2$, $7_3$), wobei jede der Auskoppelstrukturen ($7a$, $7b$, $7_1$, $7_2$, $7_3$) einer der Einkoppelstrukturen ($5a$, $5b$, $5_1$, $5_2$, $5_3$) derart zugeordnet ist, dass sie die von der entsprechenden Einkoppelstruktur ($5a$, $5b$, $5_1$, $5_2$, $5_3$) eingekoppelte Teilmenge an Strahlen aus dem Lichtleiter (3) auskoppelt.

3. Lichtleiter (3) nach Anspruch 2, **dadurch gekennzeichnet, dass** sich die Teilmengen an Strahlen in den Wertebereichen, in denen die x-Komponenten $k_x$ der sie repräsentierenden Wellenvektoren k liegen, voneinander unterscheiden, und jede der Auskoppelstrukturen ($7a$, $7b$, $7_1$, $7_2$, $7_3$) jeweils derart orientiert ist, dass für all diejenigen Strahlen der von ihr ausgekoppelten Teilmenge an Strahlen, deren Wellenvektor **k** nach der Auskopplung durch die Auskoppelstruktur ($7a$, $7b$, $7_1$, $7_2$, $7_3$) ein negatives Verhältnis $k_y/k_{xz}$ aufweist, der Wellenvektor **k** im Lichtleiter ein Verhältnis von $k_y/k_{xz}$ größer -0,2 aufweist und/oder dass für all diejenigen Strahlen der von ihr ausgekoppelten Teilmenge an Strahlen, deren Wellenvektor **k** nach der Auskopplung durch die Auskoppelstruktur ($7a$, $7b$, $7_1$, $7_2$, $7_3$) ein positives Verhältnis $k_y/k_{xz}$ aufweist, der Wellenvektor **k** im Lichtleiter (3) ein Verhältnis von $k_y/k_{xz}$ kleiner +0,2 aufweist..

4. Lichtleiter (3) nach Anspruch 2 oder Anspruch 3, **dadurch gekennzeichnet, dass**

   - eine der Teilmengen an Strahlen Strahlen umfasst, die nach dem Auskoppeln negative y-Komponenten $k_y$ der sie repräsentierenden Wellenvektoren **k** besitzen, und eine andere der Teilmenge an Strahlen Strahlen umfasst, die nach dem Auskoppeln positive y-Komponenten ky der sie repräsentierenden Wellenvektoren **k** besitzen, wobei die Werte der y-Komponenten $k_y$ der Wellenvektoren der beiden Teilmengen keinen oder nur einen kleinen Überlapp besitzen,
   - diejenige Auskoppelstruktur (7), welche die Teilmenge an Strahlen auskoppelt, die Stahlen umfasst, welche nach dem Auskoppeln negative y-Komponenten $k_y$ der sie repräsentierenden Wellenvektoren **k** besitzen, derart orientiert ist, dass für alle Strahlen der entsprechenden Teilmenge an Strahlen, für die der Wellenvektor **k** nach der Auskopplung durch die Auskoppelstruktur (7) ein negatives Verhältnis $k_y/k_{xz}$ besitzt, der Wellenvektor **k** im Lichtleiter (3) ein Verhältnis von $k_y/k_{xz}$ größer -0,2 aufweist, und
   - diejenige Auskoppelstruktur (7), welche die Teilmenge an Strahlen auskoppelt, die Strahlen umfasst, welche nach dem Auskoppeln positive y-Komponenten $k_y$ der sie repräsentierenden Wellenvektoren **k** besitzen, derart orientiert ist, dass für alle Strahlen der entsprechenden Teilmenge an Strahlen, für die der Wellenvektor **k** nach der Auskopplung durch die Auskoppelstruktur (7) ein positives Verhältnis $k_y/k_{xz}$ besitzt, der Wellenvektor **k** im Lichtleiter (3) ein Verhältnis von $k_y/k_{xz}$ kleiner +0,2 aufweist.

5. Lichtleiter (3) nach einem der Ansprüche 2 bis 4, **dadurch gekennzeichnet, dass** wenigstens manche der Teilmengen an Strahlen jeweils einen anderen Wellenlängenbereich des durch den Lichtleiter geleiteten (3) Lichtes repräsentieren.

6. Lichtleiter (3) nach einem der Ansprüche 2 bis 5, **dadurch gekennzeichnet, dass** er wenigstens zwei Unterlichtleiter ($3_1$, $3_2$, $3_3$) umfasst und jeder der Unterlichtleiter wenigstens eine Einkoppelstruktur ($5_1$, $5_2$, $5_3$) und eine Auskoppelstruktur ($7_1$, $7_2$, $7_3$) aufweist.

7. Lichtleiter (3) nach einem der Ansprüche 2 bis 6, **dadurch gekennzeichnet, dass** der Lichtleiter (3) oder wenigstens ein Unterlichtleiter ($3_1$, $3_2$, $3_3$) wenigstens zwei Einkoppelstrukturen ($5a$, $5b$, $5_1$, $5_2$, $5_3$) und zwei ($7a$, $7b$, $7_1$, $7_2$, $7_3$) Auskoppelstrukturen aufweist, wobei jede der Auskoppelstrukturen ($7a$, $7b$, $7_1$, $7_2$, $7_3$) einer der Einkoppelstrukturen ($5a$, $5b$, $5_1$, $5_2$, $5_3$) zugeordnet ist und wobei die Einkoppelstrukturen ($5a$, $5b$, $5_1$, $5_2$, $5_3$) und die Auskoppelstrukturen ($7a$, $7b$, $7_1$, $7_2$, $7_3$) derart relativ zueinander angeordnet sind, dass die von einer der Einkoppelstrukturen ($5a$, $5b$, $5_1$, $5_2$, $5_3$) eingekoppelten Strahlen im Lichtleiter (3) bzw. Unterlichtleiter ($3_1$, $3_2$, $3_3$) nicht auf eine einer anderen Einkoppelstruktur ($5a$, $5b$, $5_1$, $5_2$, $5_3$) zugeordnete Auskoppelstruktur ($7a$, $7b$, $7_1$, $7_2$, $7_3$) treffen.

8. Lichtleiter (3) nach einem der Ansprüche 2 bis 7, **dadurch gekennzeichnet, dass** der Lichtleiter (3) oder wenigstens ein Unterlichtleiter ($3_1$, $3_2$, $3_3$) wenigstens zwei Einkoppelstrukturen ($5a$, $5b$, $5_1$, $5_2$, $5_3$) und zwei Auskoppelstrukturen

(7a, 7b, $7_1$, $7_2$, $7_3$) aufweist, wobei jede der Auskoppelstrukturen (7a, 7b, $7_1$, $7_2$, $7_3$) einer der Einkoppelstrukturen (5a, 5b, $5_1$, $5_2$, $5_3$) zugeordnet ist und wobei sich die von den jeweiligen Auskoppelstrukturen (7a, 7b, $7_1$, $7_2$, $7_3$) ausgekoppelten Strahlen durch die Bereiche, in denen ihre Auftreffwinkel auf die Auskoppelstrukturen (7a, 7b, $7_1$, $7_2$, $7_3$) liegen, voneinander unterscheiden.

9. Lichtleiter (3) nach einem der Ansprüche 1 bis 8, **dadurch gekennzeichnet, dass** sich für einen ausgekoppelten Strahl das Verhältnis $k_y/k_{xz}$ seines Wellenvektors **k** nach der Auskopplung vom Verhältnis $k_y/k_{xz}$ seines Wellenvektors **k** vor der Auskopplung betragsmäßig wenigstens um 0,1 voneinander unterscheiden und/oder sich für einen ausgekoppelten Strahl das Verhältnis $k_y/k_{xz}$ seines Wellenvektors **k** nach der Auskopplung vom Verhältnis $k_y/k_{xz}$ seines Wellenvektors **k** vor der Auskopplung betragsmäßig höchstens um 0,9 voneinander unterscheiden.

10. Lichtleiter (3) nach einem der Ansprüche 1 bis 9, **dadurch gekennzeichnet, dass** die einzelnen Ein- und Auskoppelstrukturen (5, 7) derart ausgebildet sind, dass die ausgekoppelten Strahlen einen bestimmten Abschnitt oder mehrere bestimmte Abschnitte einer in einem bestimmten Abstand hinter des Auskoppelstruktur befindlichen Fläche nicht ausleuchten.

11. Lichtleiter (3) nach einem der Ansprüche 1 bis 10, **dadurch gekennzeichnet, dass** wenigstens zwischen einer der vorhandenen Einkoppelstrukturen (5) und der dieser Einkoppelstruktur (5) zugeordneten Auskoppelstruktur (7) eine beugende oder reflektierende Struktur angeordnet ist.

12. Lichtleiter (3) nach einem der Ansprüche 1 bis 11, **dadurch gekennzeichnet, dass** wenigstens eine der Auskoppelstrukturen (7) ein Auskoppelgitter mit einem Gittervektor **G** ist und sich für die von dem Auskoppelgitter (7) ausgekoppelten Strahlen der Wellenvektor **k** eines von dem Auskoppelgitter (7) ausgekoppelten Strahls durch die vektorielle Summe aus dem Wellenvektor **k** des Strahls vor dem Auftreffen auf das Auskoppelgitter und dem Gittervektor **G** ergibt.

13. Lichtleiter (3) nach einem der Ansprüche 1 bis 12, **dadurch gekennzeichnet, dass** wenigstens eine der Auskoppelstrukturen (7) ein reflektive Fläche ist und/oder wenigstens eine der Auskoppelstrukturen (7) ein Volumenhologramm ist.

14. HMD (1) mit einem Lichtleiter (3) nach einem der vorangehenden Ansprüche.

15. Verfahren zum Übertragen eines Bildes in einem am Kopf zu tragenden Display, HMD, (1) mittels eines Lichtleiters (3) nach einem der Ansprüche 1 bis 13, wobei der Lichtleiter (3) im HMD zum Platzieren vor einem Auge vorgesehen ist und die das zu übertragende Bild repräsentierenden Strahlen jeweils durch Wellenvektoren **k** repräsentiert sind, die bei vor dem Auge platzierten Lichtleiter (3) in einem von der Sehachse (A) als z-Achse, einer von temporal nach nasal verlaufenden x-Achse und einer von caudal nach cranial verlaufenden y-Achse gebildeten Koordinatensystem jeweils eine x-Komponente, eine y-Komponente und eine z-Komponente aufweisen und wobei die Gesamtheit der x-Komponenten und der y-Komponenten der Wellenvektoren k der das zu übertragende Bild repräsentierenden Strahlen ein Winkelspektrum (39, 41) des zu übertragenden Bildes bilden, **dadurch gekennzeichnet, dass** das Winkelspektrum (41) des zu übertragenden Bildes im Inneren des Lichtleiters (3) im Vergleich zum Winkelspektrum (39) des zu übertragenden Bildes außerhalb des Lichtleiters (3) entlang der y-Achse verschoben transportiert wird.

16. Verfahren nach Anspruch 15, **dadurch gekennzeichnet, dass** das Winkelspektrum ($39_1$, $39_2$, $41_1$, $41_2$) des zu übertragenden Bildes in wenigstens zwei Teile geteilt wird und die beiden Teile des Winkelspektrums ($41_1$, $41_2$) im Inneren des Lichtleiters (3) im Vergleich zum Winkelspektrum ($39_1$, $39_2$) des zu übertragenden Bildes außerhalb des Lichtleiters (3) entlang der y-Achse unterschiedlich verschoben transportiert werden und insbesondere außerhalb des Lichtleiters in Richtung der der y-Achse übereinander angeordnet sind.

**Claims**

1. Light guide (3) for guiding light for a head-mounted display, HMD, (1), wherein the light guide (3) is provided in the HMD for placement in front of an eye and comprises:

   - at least one input coupling structure (5) for coupling rays of the light that is guided through the light guide (3) into the light guide (3), wherein the rays are represented in each case by wave vectors k which, if the light guide (3) is placed in front of the eye, each have, in a coordinate system formed by the visual axis (A) as the z-axis, an x-axis extending from temporal to nasal, and a y-axis extending from caudal to cranial, a projection into the xz-plane with an absolute value of $k_{xz}$ and a y-component $k_y$, and
- at least one output coupling structure (7) for coupling the rays that were guided through the light guide (3) out of the light guide (3),

**characterized in that** the output coupling structure (7) is oriented such that for all the rays that are coupled out by the output coupling structure (7) and for which the wave vector **k** has a negative ratio $k_y/k_{xz}$ after they have been coupled out, the wave vector **k** in the light guide (3) has a ratio of $k_y/k_{xz}$ of greater than -0.2, and/or that for all the rays that are coupled out by the output coupling structure (7) and for which the wave vector **k** has a positive ratio $k_y/k_{xz}$ after they have been coupled out, the wave vector **k** in the light guide has a ratio of $k_y/k_{xz}$ of less than +0.2.

2.  Light guide (3) according to Claim 1, **characterized in that** the light guide (3) has at least two input coupling structures ($5a$, $5b$, $5_1$, $5_2$, $5_3$), which each couple in one of two different subsets of rays of the light guided through the light guide (3), and at least two output coupling structures ($7a$, $7b$, $7_1$, $7_2$, $7_3$), wherein each of the output coupling structures ($7a$, $7b$, $7_1$, $7_2$, $7_3$) is assigned to one of the input coupling structures ($5a$, $5b$, $5_1$, $5_2$, $5_3$) in a way such that it couples that subset of rays out of the light guide (3) that was coupled in by the corresponding input coupling structure ($5a$, $5b$, $5_1$, $5_2$, $5_3$).

3.  Light guide (3) according to Claim 2, **characterized in that** the subsets of rays in the value ranges in which the x-components $k_x$ of the wave vectors **k** representing them lie differ from one another and each of the output coupling structures ($7a$, $7b$, $7_1$, $7_2$, $7_3$) is oriented in each case in a way such that for all the rays of the subset of rays coupled out thereby and whose wave vector **k** has a negative ratio $k_y/k_{xz}$ after they have been coupled out by the output coupling structure ($7a$, $7b$, $7_1$, $7_2$, $7_3$), the wave vector **k** in the light guide has a ratio of $k_y/k_{xz}$ greater than -0.2 and/or that for all the rays of the subset of rays that are coupled out thereby and whose wave vector **k** has a positive ratio $k_y/k_{xz}$ after they have been coupled out by the output coupling structure ($7a$, $7b$, $7_1$, $7_2$, $7_3$), the wave vector **k** in the light guide (3) has a ratio of $k_y/k_{xz}$ of less than +0.2.

4.  Light guide (3) according to Claim 2 or Claim 3, **characterized in that**

    - one of the subsets of rays comprises rays that, after being coupled out, have negative y-components $k_y$ of the wave vectors **k** that represent them, and another one of the subset of rays comprises rays that, after being coupled out, have positive y-components ky of the wave vectors **k** that represent them, wherein the values of the y-components $k_y$ of the wave vectors of the two subsets have no or only a small overlap,
    - the output coupling structure (7) coupling out the subset of rays that comprises rays that, after they are coupled out, have negative y-components $k_y$ of the wave vectors **k** that represent them is oriented such that, for all the rays of the corresponding subset of rays for which the wave vector **k** has a negative ratio $k_y/k_{xz}$ after they are coupled out through the output coupling structure (7), the wave vector **k** in the light guide (3) has a ratio of $k_y/k_{xz}$ greater than -0.2, and
    - the output coupling structure (7) coupling out the subset of rays that comprises rays that, after they are coupled out, have positive y-components $k_y$ of the wave vectors **k** that represent them is oriented such that, for all the rays of the corresponding subset of rays for which the wave vector **k** has a positive ratio $k_y/k_{xz}$ after they are coupled out through the output coupling structure (7), the wave vector **k** in the light guide (3) has a ratio of $k_y/k_{xz}$ of less than +0.2.

5.  Light guide (3) according to one of Claims 2 to 4, **characterized in that** at least some of the subsets of rays each represent a different wavelength range of the light that is guided through the light guide (3).

6.  Light guide (3) according to one of Claims 2 to 5, **characterized in that** it comprises at least two subsidiary light guides ($3_1$, $3_2$, $3_3$) and each of the subsidiary light guides has at least one input coupling structure ($5_1$, $5_2$, $5_3$) and one output coupling structure ($7_1$, $7_2$, $7_3$).

7.  Light guide (3) according to one of Claims 2 to 6, **characterized in that** the light guide (3) or at least one subsidiary light guide ($3_1$, $3_2$, $3_3$) has at least two input coupling structures ($5a$, $5b$, $5_1$, $5_2$, $5_3$) and two output coupling structures ($7a$, $7b$, $7_1$, $7_2$, $7_3$), wherein each of the output coupling structures ($7a$, $7b$, $7_1$, $7_2$, $7_3$) is assigned to one of the input coupling structures ($5a$, $5b$, $5_1$, $5_2$, $5_3$) and wherein the input coupling structures ($5a$, $5b$, $5_1$, $5_2$, $5_3$) and the output coupling structures ($7a$, $7b$, $7_1$, $7_2$, $7_3$) are arranged relative to one another such that the rays that are coupled in by one of the input coupling structures ($5a$, $5b$, $5_1$, $5_2$, $5_3$) in the light guide (3) or subsidiary light guide ($3_1$, $3_2$, $3_3$) are not incident on an output coupling structure ($7a$, $7b$, $7_1$, $7_2$, $7_3$) that is assigned to another input coupling structure

(5a, 5b, $5_1$, $5_2$, $5_3$).

8.  Light guide (3) according to one of Claims 2 to 7, **characterized in that** the light guide (3) or at least one subsidiary light guide ($3_1$, $3_2$, $3_3$) has at least two input coupling structures (5a, 5b, $5_1$, $5_2$, $5_3$) and two output coupling structures (7a, 7b, $7_1$, $7_2$, $7_3$), wherein each of the output coupling structures (7a, 7b, $7_1$, $7_2$, $7_3$) is assigned to one of the input coupling structures (5a, 5b, $5_1$, $5_2$, $5_3$) and wherein the rays that are coupled out by the respective output coupling structures (7a, 7b, $7_1$, $7_2$, $7_3$) differ by the regions in which the angles of incidence thereof onto the output coupling structures (7a, 7b, $7_1$, $7_2$, $7_3$) are located.

9.  Light guide (3) according to one of Claims 1 to 8, **characterized in that**, for a coupled-out ray, the ratio $k_y/k_{xz}$ of its wave vector **k** after it is coupled out differs from the ratio $k_y/k_{xz}$ of its wave vector **k** before it is coupled out at least by 0.1 in terms of absolute value and/or, for a coupled-out ray, the ratio $k_y/k_{xz}$ of its wave vector **k** after it is coupled out differs from the ratio $k_y/k_{xz}$ of its wave vector **k** before it is coupled out at most by 0.9 in terms of absolute value.

10. Light guide (3) according to one of Claims 1 to 9, **characterized in that** the individual input coupling and output coupling structures (5, 7) are designed such that the coupled-out rays do not fully illuminate a specific section or a plurality of specific sections of an area located at a specific distance behind the output coupling structure.

11. Light guide (3) according to one of Claims 1 to 10, **characterized in that** a diffractive or reflective structure is arranged at least between one of the existing input coupling structures (5) and the output coupling structure (7) that is assigned to said input coupling structure (5).

12. Light guide (3) according to one of Claims 1 to 11, **characterized in that** at least one of the output coupling structures (7) is an output coupling grating with a grating vector **G** and, for the rays that are coupled out by the output coupling grating (7), the wave vector **k** of a ray that is coupled out by the output coupling grating (7) results from the vectorial sum of the wave vector **k** of the ray before it is incident on the output coupling grating and the grating vector **G.**

13. Light guide (3) according to one of Claims 1 to 12, **characterized in that** at least one of the output coupling structures (7) is a reflective surface and/or at least one of the output coupling structures (7) is a volume hologram.

14. HMD (1) with a light guide (3) according to one of the preceding claims.

15. Method for transmitting an image in a head-mounted display, HMD, (1) by way of a light guide (3) according to one of Claims 1 to 13, wherein the light guide (3) in the HMD is provided for placement in front of an eye and the rays representing the image to be transmitted are each represented by wave vectors **k** which, if the light guide (3) is placed in front of the eye, each have, in a coordinate system formed by the visual axis (A) as the z-axis, an x-axis extending from temporal to nasal, and a y-axis extending from caudal to cranial, an x-component, a y-component, and a z-component, and wherein the totality of the x-components and the y-components of the wave vectors **k** of the rays representing the image to be transmitted form an angular spectrum (39, 41) of the image to be transmitted, **characterized in that** the angular spectrum (41) of the image to be transmitted is transported in the interior of the light guide (3) in a manner displaced along the y-axis compared to the angular spectrum (39) of the image to be transmitted outside the light guide (3).

16. Method according to Claim 15, **characterized in that** the angular spectrum ($39_1$, $39_2$, $41_1$, $41_2$) of the image to be transmitted is divided into at least two parts and the two parts of the angular spectrum ($41_1$, $41_2$) in the interior of the light guide (3) are transported with a different displacement along the y-axis compared to the angular spectrum ($39_1$, $39_2$) of the image to be transmitted outside the light guide (3) and are in particular arranged one above the other outside the light guide in the direction of the y-axis.

**Revendications**

1.  Guide de lumière (3) destiné à guider de la lumière destinée à un casque HMD (1) porté sur la tête, le guide de lumière (3) du casque HMD étant prévu pour être placé devant un œil et comprenant :

    - au moins une structure d'injection par couplage (5) destinée à injecter par couplage des rayons de la lumière, guidée par le guide de lumière (3), dans le guide de lumière (3), les rayons étant chacun représentés par des vecteurs d'onde k qui comportent, lorsque le guide de lumière (3) est placé devant l'œil, dans un système de coordonnées formé par l'axe de vision (A) ou axe z, un axe x temporo-nasal et un axe y caudo-crânial, une projection dans le plan xy avec une valeur $k_{xy}$ et une composante y $k_y$, et

- au moins une structure de sortie par couplage (7) destinée à sortir du guide d'onde (3) par couplage les rayons guidés par le guide d'onde (3),

**caractérisé en ce que** la structure de sortie par couplage (7) est orientée de telle manière que, pour tous les rayons qui sortent par couplage de la structure de sortie par couplage (7) et pour lesquels le vecteur d'onde k a un rapport $k_y/k_{xz}$ négatif, le vecteur d'onde k dans le guide de lumière (3) ait un rapport $k_y/k_{xz}$ supérieur à -0,2 et/ou **en ce que**, pour tous les rayons qui sortent par couplage de la structure de sortie par couplage (7) et pour lesquels le vecteur d'onde k a un rapport $k_y/k_{xz}$ positif après la sortie par couplage, le vecteur d'onde k dans le guide de lumière a un rapport $k_y/k_{xz}$ inférieur à +0,2.

2. Guide de lumière (3) selon la revendication 1, **caractérisé en ce que** le guide de lumière (3) comporte au moins deux structures d'injection par couplage ($5a$, $5b$, $5_1$, $5_2$, $5_3$), qui injectent chacune par couplage l'un parmi deux sous-ensembles différents de rayons de la lumière guidée à travers le guide de lumière (3), et au moins deux structures de sortie par couplage ($7a$, $7b$, $7_1$, $7_2$, $7_3$), chacune des structures de sortie par couplage ($7a$, $7b$, $7_1$, $7_2$, $7_3$) étant associée à l'une des structures d'injection par couplage ($5a$, $5b$, $5_1$, $5_2$, $5_3$) de manière à faire sortir du guide de lumière (3) par couplage le sous-ensemble de rayons qui a été injecté par couplage par la structure d'injection par couplage correspondante ($5a$, $5b$, $5_1$, $5_2$, $5_3$).

3. Guide de lumière (3) selon la revendication 2, **caractérisé en ce que** les sous-ensembles de rayons, situés dans les plages de valeurs dans lesquelles se trouvent les composantes x $k_x$ des vecteurs d'onde k qui les représentent, diffèrent les uns des autres et chacune des structures de sortie par couplage ($7a$, $7b$, $7_1$, $7_2$, $7_3$) est orientée de telle sorte que, pour tous les rayons du sous-ensemble de rayons qu'elle fait sortir par couplage et dont le vecteur d'onde k a un rapport $k_y/k_{xz}$ négatif après la sortie par couplage effectuée par la structure de sortie par couplage ($7a$, $7b$, $7_1$, $7_2$, $7_3$), le vecteur d'onde k dans le guide de lumière ait un rapport $k_y/k_{xz}$ supérieur à -0,2 et/ou **en ce que**, pour tous les rayons du sous-ensemble de rayons qu'elle fait sortir par couplage et dont le vecteur d'onde k a un rapport $k_y/k_{xz}$ positif après sortie par couplage effectuée par la structure de sortie par couplage ($7a$, $7b$, $7_1$, $7_2$, $7_3$), le vecteur d'onde k dans le guide de lumière (3) a un rapport $k_y/k_{xz}$ inférieur à +0,2.

4. Guide de lumière (3) selon la revendication 2 ou la revendication 3, **caractérisé en ce que**

- l'un des sous-ensembles de rayons comprend des rayons qui, après sortie par couplage, ont des composantes y $k_y$ négatives des vecteurs d'onde k qui les représentent, et un autre des sous-ensembles de rayons comprend des rayons qui, après sortie par couplage, ont des composantes y $k_y$ positives des vecteurs d'onde k qui les représentent, les valeurs des composantes y $k_y$ des vecteurs d'onde des deux sous-ensembles ne présentant aucun chevauchement ou seulement un faible chevauchement,
- la structure de sortie par couplage (7) qui fait sortir par couplage le sous-ensemble de rayons qui comprend des rayons qui, après sortie par couplage, ont des composantes y $k_y$ négatives des vecteurs d'onde k qui les représentent, est orientée de telle sorte que, pour tous les rayons du sous-ensemble de rayons correspondant pour lequel le vecteur d'onde k a un rapport $k_y/k_{xz}$ négatif après la sortie par couplage effectuée par la structure de sortie par couplage (7), le vecteur d'onde k dans le guide de lumière (3) ait un rapport $k_y/k_{xz}$ supérieur à -0,2 et
- la structure de sortie par couplage (7), qui fait sortir par couplage le sous-ensemble de rayons qui comprend des rayons qui, après sortie par couplage, ont des composantes y $k_y$ positives des vecteurs d'onde k qui les représentent, est orientée de telle sorte que, pour tous les rayons du sous-ensemble de rayons correspondant pour lequel le vecteur d'onde k a un rapport $k_y/k_{xy}$ positif après la sortie par couplage effectuée par la structure de sortie par couplage (7), le vecteur d'onde k dans le guide de lumière (3) ait un rapport $k_y/k_{xy}$ inférieur à +0,2.

5. Guide de lumière (3) selon l'une des revendications 2 à 4, **caractérisé en ce qu'**au moins certains des sous-ensembles de rayons représentent chacun une plage de longueur d'onde différente de la lumière guidée à travers le guide de lumière (3).

6. Guide de lumière (3) selon l'une des revendications 2 à 5, **caractérisé en ce qu'**il comprend au moins deux sous-guides de lumière ($3_1$, $3_2$, $3_3$) et chacun des sous-guides de lumière comporte au moins une structure de sortie par couplage ($5_1$, $5_2$, $5_3$) et une structure de sortie par couplage ($7_1$, $7_2$, $7_3$).

7. Guide de lumière (3) selon l'une des revendications 2 à 6, **caractérisé en ce que** le guide de lumière (3) ou au moins un sous-guide de lumière ($3_1$, $3_2$, $3_3$) comporte au moins deux structures d'injection par couplage ($5a$, $5b$,

$5_1, 5_2, 5_3$) et deux structures de sortie par couplage ($7a, 7b, 7_1, 7_2, 7_3$), chacune des structures de sortie par couplage ($7a, 7b, 7_1, 7_2, 7_3$) étant associée à l'une des structures d'injection par couplage ($5a, 5b, 5_1, 5_2, 5_3$) et les structures d'injection par couplage ($5a, 5b, 5_1, 5_2, 5_3$) et les structures de sortie par couplage ($7a, 7b, 7_1, 7_2, 7_3$) étant disposées les unes par rapport aux autres de telle sorte que les rayons, injectés par couplage par une des structures d'injection par couplage ($5a, 5b, 5_1, 5_2, 5_3$), dans le guide de lumière (3) ou le sous-guide de lumière ($3_1, 3_2, 3_3$) ne soient pas incidents à une structure de sortie par couplage ($7a, 7b, 7_1, 7_2, 7_3$) associée à une autre structure de sortie par couplage ($5a, 5b, 5_1, 5_2, 5_3$).

8. Guide de lumière (3) selon l'une des revendications 2 à 7, **caractérisé en ce que** le guide de lumière (3) ou au moins un sous-guide de lumière ($3_1, 3_2, 3_3$) comporte au moins deux structures d'injection par couplage ($5a, 5b, 5_1, 5_2, 5_3$) et deux structures de sortie par couplage A ($7a, 7b, 7_1, 7_2, 7_3$), chacune des structures de sortie par couplage ($7a, 7b, 7_1, 7_2, 7_3$) étant associée à l'une des structures d'injection par couplage ($5a, 5b, 5_1, 5_2, 5_3$) et les rayons sortis par couplage par les structures de sortie par couplage respectives ($7a, 7b, 7_1, 7_2, 7_3$) des rayons couplés se distinguant les uns des autres par les zones dans lesquelles se trouvent leur angle d'incidence aux structures de sortie par couplage ($7a, 7b, 7_1, 7_2, 7_3$).

9. Guide de lumière (3) selon l'une des revendications 1 à 8, **caractérisé en ce que**, pour un rayon sorti par couplage, le rapport $k_y/k_{xz}$ de son vecteur d'onde k après la sortie par couplage diffère en valeur absolue au moins de 0,1 du rapport $k_y/k_{xz}$ de son vecteur d'onde k avant la sortie par couplage et/ou, pour un rayon sorti par couplage, le rapport $k_y/k_{xz}$ de son vecteur d'onde k après sortie par couplage diffère en valeur absolue de 0,9 maximum du rapport $k_y/k_{xz}$ de son vecteur d'onde k avant sortie par couplage.

10. Guide de lumière (3) selon l'une des revendications 1 à 9, **caractérisé en ce que** les structures individuelles d'injection et de sortie par couplage (5, 7) sont conçues de telle sorte que les rayons sortis par couplage n'éclairent pas une portion déterminée ou plusieurs portions déterminées d'une surface située à une distance déterminée derrière la structure de sortie par couplage.

11. Guide de lumière (3) selon l'une des revendications 1 à 10, **caractérisé en ce qu'**une structure diffractive ou réflexives est disposée au moins entre une des structures d'injection par couplage existantes (5) et la structure de sortie par couplage (7) associée à cette structure d'injection par couplage (5).

12. Guide de lumière (3) selon l'une des revendications 1 à 11, **caractérisé en ce qu'**au moins une des structures de sortie par couplage (7) est un réseau de sortie par couplage présentant un vecteur de réseau G et, pour les rayons sortis par couplage par le réseau de sortie par couplage (7), le vecteur d'onde k d'un rayon sorti par couplage par le réseau de sortie par couplage (7) est obtenu par la somme vectorielle du vecteur d'onde k du rayon avant qu'il ne soit incident au réseau de sortie par couplage et du vecteur de réseau G.

13. Guide de lumière (3) selon l'une des revendications 1 à 12, **caractérisé en ce qu'**au moins une des structures de sortie par couplage (7) est une surface réflexive et/ou au moins une des structures de sortie par couplage (7) est un hologramme de volume.

14. Casque HMD (1) comprenant un guide de lumière (3) selon l'une des revendications précédentes.

15. Procédé de transmission d'une image dans un casque HMD (1) au moyen d'un guide de lumière (3) selon l'une des revendications 1 à 13,
le guide de lumière (3) dans le casque HMD étant prévu pour être placé devant un œil et les rayons représentant l'image à transmettre étant chacun représentés par des vecteurs d'onde k qui comportent chacun, lorsque le guide de lumière (3) est placé devant l'œil, dans un système de coordonnées formé par l'axe de vision (A) ou axe z, un axe x temporo-nasal et un axe y caudo-crânial, une composante x, une composante y et une composante z et la totalité des composantes x et des composantes y des vecteurs d'onde k des rayons représentant l'image à transmettre formant un spectre angulaire (39, 41) de l'image à transmettre, **caractérisé en ce que** le spectre angulaire (41) de l'image à transmettre à l'intérieur du guide de lumière (3) est transporté le long de l'axe y en étant décalé du spectre angulaire (39) de l'image à transmettre à l'extérieur du guide de lumière (3).

16. Procédé selon la revendication 15, **caractérisé en ce que** le spectre angulaire ($39_1, 39_2, 41_1, 41_2$) de l'image à transmettre est divisé en au moins deux parties et les deux parties du spectre angulaire ($41_1, 41_2$) à l'intérieur du guide de lumière (3) sont transportées le long de l'axe y avec des décalages différents par rapport au spectre angulaire ($39_1, 39_2$) de l'image à transmettre à l'extérieur du guide de lumière (3) et en particulier sont disposés l'un au-dessus de l'autre à l'extérieur du guide de lumière dans la direction de l'axe y.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

X

43

33

FIG 17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120062998 A1
- WO 2017102795 A1
- US 20100220295 A1
- WO 2017120334 A1
- WO 2017120341 A1
- US 20170322426 A1